(19) **Europäisches Patentamt / European Patent Office / Office européen des brevets**

(11) **EP 2 770 312 B1**

(12) **FASCICULE DE BREVET EUROPEEN**

(45) Date de publication et mention de la délivrance du brevet:
**01.06.2022 Bulletin 2022/22**

(21) Numéro de dépôt: **14155652.2**

(22) Date de dépôt: **18.02.2014**

(51) Classification Internationale des Brevets (IPC):
***G01J 5/22*** *(2006.01)*

(52) Classification Coopérative des Brevets (CPC):
**G01J 5/22; H04N 5/33; H04N 5/3655**

(54) **Détecteur bolométrique à polarisation adaptative en température**

Bolometrischer Detektor mit temperaturabhängiger, kontrollierter Polarisation

Bolometric detector having a temperature dependent controlled polarisation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2013 FR 1351583**

(43) Date de publication de la demande:
**27.08.2014 Bulletin 2014/35**

(73) Titulaire: **LYNRED**
**91127 Palaiseau (FR)**

(72) Inventeurs:
• **Vilain, Michel**
**38450 SAINT GEORGES DE COMMIERS (FR)**
• **Robert, Patrick**
**38140 REAUMONT (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-98/35212**

**Description**

**DOMAINE DE L'INVENTION**

La présente invention a trait au domaine de l'imagerie et de la pyrométrie bolométrique infrarouge. Plus particulièrement, l'invention concerne des détecteurs infrarouges bolométriques comprenant une matrice de bolomètres formés de membranes suspendues au-dessus d'un substrat.

**ETAT DE LA TECHNIQUE**

Dans le domaine des détecteurs infrarouges dits « thermiques », il est connu d'utiliser des matrices monodimensionnelles ou bidimensionnelles d'éléments sensibles au rayonnement infrarouge, susceptibles de fonctionner à température ambiante.

Un détecteur infrarouge thermique utilise traditionnellement la variation d'une grandeur physique d'un matériau approprié dit « thermométrique » ou « bolométrique », en fonction de sa température. Le plus couramment, cette grandeur physique est la résistivité électrique dudit matériau qui varie fortement avec la température. Les éléments sensibles unitaires du détecteur, ou « bolomètres », prennent usuellement la forme de membranes, comprenant chacune une couche en matériau thermométrique, et suspendues au-dessus d'un substrat, généralement réalisé en silicium, via des bras de soutien de résistance thermique élevée, la matrice de membranes suspendues étant usuellement désignée sous le terme de « rétine ».

Ces membranes mettent notamment en œuvre une fonction d'absorption du rayonnement infrarouge incident, une fonction de conversion de la puissance du rayonnement absorbé en puissance calorifique, et une fonction thermométrique de conversion de la puissance calorifique produite en une variation de la résistivité du matériau thermométrique, ces fonctions pouvant être mises en œuvre par un ou plusieurs éléments distincts.

Par ailleurs, les bras de soutien des membranes sont également conducteurs et connectés à la couche thermométrique de celles-ci, et il est usuellement ménagé dans le substrat au-dessus duquel sont suspendues les membranes, des moyens d'adressage et de polarisation séquentiels des éléments thermométriques des membranes, et des moyens de formation des signaux électriques utilisables en formats vidéo. Ce substrat et les moyens intégrés sont communément désignés par l'expression « circuit de lecture ».

Le circuit de lecture et la rétine sensible d'un détecteur sont habituellement intégrés dans un boîtier hermétique sous très faible pression, muni d'une fenêtre transparente aux rayonnements d'intérêt, usuellement entre 8 et 14 micromètres de longueur d'onde. Cette gamme correspond à la fenêtre de transparence de l'atmosphère et aux rayonnements majoritaires issus de scènes au voisinage de 300K. Pour obtenir une image thermique ou pyrométrique par l'intermédiaire de ce détecteur, la scène est focalisée à travers une optique adaptée sur le plan focal où est disposée la rétine, et des stimuli électriques cadencés sont appliqués par l'intermédiaire du circuit de lecture à chacun des bolomètres, ou à chaque rangée de tels bolomètres, afin d'obtenir un signal électrique « vidéo » constituant l'image ou la mesure de la température atteinte par chacun desdits détecteurs élémentaires. Ce signal est éventuellement mis en forme de manière plus ou moins élaborée, directement par le circuit de lecture, puis transmis sous forme analogique ou digitale à une électronique extérieure au boîtier. Cette électronique applique typiquement diverses corrections à chaque trame vidéo délivrée par le détecteur, en particulier une correction de dispersions spatiales d'offset et de gain (dites « NUC » pour *Non Uniformity Corrections*), de manière à générer une image thermique ou pyrométrique proposée à l'affichage, ou plus généralement à l'exploitation des signaux ainsi formés à partir de la scène observée.

Un tel détecteur présente de nombreux avantages en termes de coût de fabrication et d'utilisation, mais également des inconvénients qui peuvent limiter ses performances en l'absence de précautions particulières.

Plus particulièrement, il se pose un problème de dérive du signal moyen en sortie des bolomètres lorsque la température du substrat évolue par suite, en particulier, des changements des conditions extérieures, qui se reportent essentiellement par conduction thermique à travers les éléments du système intégré jusqu'au niveau du substrat, qui définit la température moyenne des membranes sensibles. Or, il est bien connu que la sensibilité des bolomètres à une variation de 1°C par exemple de température du substrat, est typiquement cinquante à cent fois plus élevée que leur sensibilité à une variation de température de 1°C de la scène observée. Il en résulte qu'en l'absence de précautions spécifiques, le signal utile relatif à la scène est noyé dans cette composante de fond dépourvue d'intérêt.

Pour éviter ce défaut, les détecteurs bolométriques fonctionnant à température ambiante ont été dès l'origine de leur développement industriel, équipés d'un module de stabilisation de température du substrat, habituellement un module Peltier (*TEC* pour l'expression anglo-saxonne *« Thermo Electric Cooler »*). Un élément résistif régulé par effet joule en continuité thermique avec le substrat procure également une stabilité satisfaisante de température, quoique sans capacité active de refroidissement. Ces moyens se traduisent cependant en une complexité et un coût du composant supplémentaires, et impliquent une consommation électrique d'autant plus élevée que la température ambiante est éloignée de la température de stabilisation choisie. Or, le coût de fabrication de ces détecteurs bolométriques et la consommation électrique du système qui les met en œuvre constituent précisément les intérêts majeurs de ces détecteurs.

De fait, la tendance est de se passer de système de stabilisation thermique, et le problème de l'effet adverse des variations de température du substrat sur la stabilité du signal doit donc être traité. La solution généralement mise en œuvre est la disposition, dans le circuit électronique de formation du signal en relation avec la température des bolomètres d'imagerie (ainsi nommés car sensibles au rayonnement électromagnétique incident), d'un élément de compensation de température du plan focal (*TPF*) lui-même bolométrique, c'est-à-dire dont le comportement électrique suit la température du substrat, mais reste essentiellement insensible au rayonnement. Ce résultat est obtenu par exemple au moyen de structures bolométriques dotées par construction d'une faible résistance thermique vers le substrat, et/ou en masquant ces structures derrière un écran opaque au rayonnement thermique.

La mise en œuvre de ces éléments de compensation offre par ailleurs l'avantage d'éliminer l'essentiel du courant dit de mode commun issu des bolomètres d'imagerie ou « actifs ».

Par ailleurs, il est requis une résolution thermique (plus petit écart de température séparable du niveau de fond sur la scène) inférieure typiquement à 50mK (milli Kelvin). Les lois du rayonnement et de l'optique conduisent à un facteur d'atténuation de cet écart de température de l'ordre de 50 à 100 entre la scène et la membrane d'un bolomètre élémentaire. Les éléments sensibles présentent usuellement une variation relative de résistance (*TCR*, pour l'expression anglo-saxonne « *Temperature Coefficient of Resistance* ») de l'ordre de -2% par degré ; il résulte de ces divers facteurs d'échelle qu'il est nécessaire de discriminer une variation relative de résistance inférieure à $2.\,10^{-5}$ (20 ppm).

Il s'agit donc, en admettant un mode de lecture de résistance à tension de polarisation constante, de discriminer d'infimes variations du courant qui traverse chaque résistance bolométrique. Pour ce faire, il est nécessaire d'éliminer l'essentiel du signal dit de mode commun indépendant de la scène, de manière à représenter efficacement les variations spatiales et temporelles en relation avec la scène observée, et ce dans la dynamique électrique disponible du circuit de lecture.

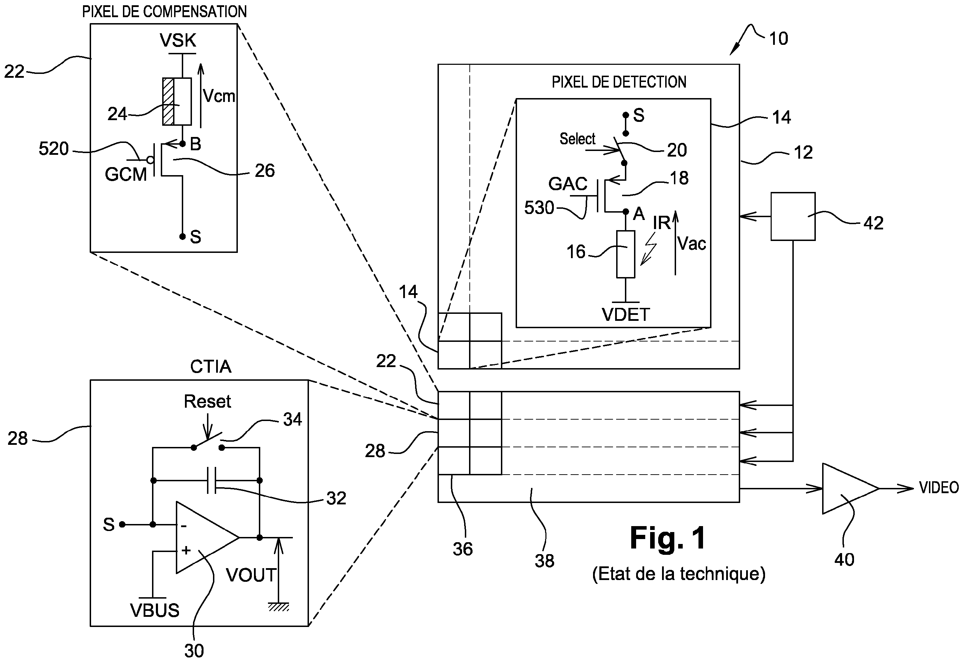

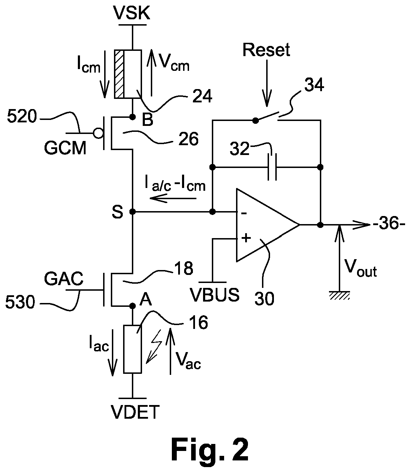

La figure 1 est un schéma électrique d'un détecteur bolométrique **10** sans régulation de température, ou détecteur « *TECless* », de l'état de la technique, comprenant une structure de compensation du mode commun, et la figure 2 est un schéma électrique d'un circuit mis en œuvre pour former un signal de lecture d'un bolomètre du détecteur compensé du mode commun. Un tel détecteur est par exemple décrit dans le document : « Uncooled amorphous silicon technology enhancement for $25\mu$m pixel pitch achievement » ; E. Mottin et al, Infrared Technology and Application XXVIII, SPIE, vol. 4820E.

Le détecteur **10** comprend une matrice bidimensionnelle **12** d'éléments unitaires de détection bolométriques **14** identiques, ou « pixels », comprenant chacun un bolomètre résistif sensible **16** sous la forme d'une membrane suspendue au-dessus d'un substrat, tel que décrit précédemment, et de résistance électrique $R_{ac}$. Chaque bolomètre **16** est connecté à l'une de ses bornes à une tension constante *VDET*, notamment la masse du détecteur **10**, et à l'autre de ses bornes à un transistor MOS de polarisation **18** fonctionnant en régime saturé, par exemple un transistor NMOS, réglant la tension $V_{ac}$ aux bornes du bolomètre **16** au moyen d'une tension de commande de grille *GAC.* Si *A* désigne le nœud correspondant à la source du MOS **18** et si *VA* est la tension à ce nœud, qui dépend de la tension de grille *GAC,* la tension $V_{ac}$ est alors égale à $V_{ac}=VA-VDET.$ Le pixel **14** comprend également un interrupteur de sélection **20**, connecté entre le transistor MOS **18** et un nœud *S* prévu pour chaque colonne de la matrice **12**, et piloté par un signal de commande *Select*, permettant la sélection du bolomètre **16** pour sa lecture. Le transistor **18** et l'interrupteur **20** sont usuellement formés dans le substrat sous l'emprise de la membrane du bolomètre **16**. Les éléments **16** et **18** forment une branche dite de détection. Notamment, les pixels étant identiques et la tension VDET d'une part et la tension GAC d'autre part étant identiques pour tous les pixels, les bolomètres **16** sont donc polarisés en tension sous la même tension $V_{ac}$. En outre, la tension de grille *GAC* étant constante, la tension $V_{ac}$ est donc également constante.

Le détecteur **10** comporte également, en pied de chaque colonne de la matrice **12**, une structure de compensation **22**, également usuellement désignée sous le terme de structure « d'ébasage » ou de « *skimming* ». Comme cela est décrit précédemment, la valeur de la résistance électrique des bolomètres de détection **16** est dictée en grande partie par la température du substrat. Le courant parcourant un bolomètre de détection **16** comporte ainsi une importante composante qui dépend de la température du substrat et est indépendante de la scène observée. La structure de compensation **22** a pour fonction de produire un courant électrique à des fins de compensation partielle ou totale de cette composante. Au sens de l'invention, la composante de courant des bolomètres de détection **16** dictée par la température du substrat est désignée sous l'expression « courant de mode commun de détection ». Le courant produit par la structure de compensation **22** aux fins de compensation du courant de mode commun de détection est quant à lui désigné sous l'expression « courant de mode commun de compensation ».

La structure **22** comporte un bolomètre de compensation **24**, de résistance électrique $R_{cm}$, rendu insensible au rayonnement incident issu de la scène à observer. Le bolomètre **24** est construit au moyen du même matériau thermométrique que le bolomètre **16**, mais présente une très faible résistance thermique vers le substrat. Par exemple, les éléments résistifs du bolomètre de compensation **24** sont réalisés directement au contact du substrat, ou le bolomètre **24** comporte une membrane similaire à celle des bolomètres de détection **16** suspendue au-dessus du substrat au moyen de structures présentant une résistance thermique très faible, ou encore le bolomètre de compensation **24** comprend une membrane et des bras de soutien sensiblement identiques à ceux des bolomètres de détection **16** et un matériau bon conducteur thermique remplit l'espace entre la membrane du bolomètre **24** et le substrat. La résistance électrique du bolomètre **24** est ainsi essentiellement dictée par la température du substrat, le bolomètre **24** est alors dit « thermalisé » au substrat.

Le bolomètre **24** est connecté à l'une de ses bornes à une tension constante *VSK,* et la structure de compensation **22** comporte en outre un transistor MOS de polarisation **26** fonctionnant en régime saturé, de polarité opposée à celle des transistors **18** des pixels de détection **14**, par exemple un transistor PMOS, réglant la tension $V_{cm}$ aux bornes du bolomètre **24** au moyen d'une tension de commande de grille *GCM* et connecté entre l'autre borne du bolomètre de compensation **24** et le nœud *S*. Si on désigne par *B* le nœud correspondant au drain du MOS **26** et par *VB* la tension à ce nœud, la tension $V_{cm}$ est alors égale à $V_{cm}=VSK\text{-}VB$. Les éléments **24** et **26** forment une branche dite de compensation commune à chaque colonne.

La valeur du courant de mode commun de compensation est définie par la valeur de la résistance $R_{cm}$ du bolomètre **24** et des paramètres de polarisation de ce dernier.

Selon une première variante, la résistance $R_{cm}$ est choisie sensiblement identique à celle des bolomètres de détection **16** et la tension de polarisation des bolomètres de compensation **24** est choisie proche de celle des bolomètres de détection, de manière à obtenir un courant de mode commun de compensation proche du courant de mode commun de détection. Cependant, on notera qu'il n'est pas nécessaire d'ajuster par conception la résistance $R_{cm}$ du bolomètre **24** à une valeur proche de celle des bolomètres de détection **16**, puisqu'il importe seulement d'ajuster le courant qui le traverse à une valeur proche de celle qui parcourt la branche de détection pendant la lecture.

Selon une seconde variante, ce résultat est également obtenu au moyen d'une résistance du bolomètre de compensation **24** plus faible que celle des bolomètres de détection **16**, et d'une tension de polarisation $V_{cm}$ plus faible grossièrement dans la même proportion.

La seconde variante est usuellement préférée car elle permet de distribuer plus efficacement l'amplitude de polarisation *VSK-VDET* disponible sur le pont bolométrique, caractéristique de la technologie CMOS mise en œuvre pour la fabrication du circuit de lecture. En effet, il est ordinairement avantageux de polariser davantage le bolomètre actif, au détriment de la polarisation du bolomètre de compensation, c'est-à-dire imposer $V_{ac} > V_{cm}$ pour obtenir une sensibilité optimale du détecteur.

Le détecteur **10** comporte également, en pied de chaque colonne de la matrice **12,** un intégrateur **28** de type CTIA (pour l'expression anglo-saxonne « *Capacitive Trans Impedance Amplifier* ») comportant par exemple un amplificateur opérationnel **30** et un condensateur **32** connecté entre l'entrée inverseuse et la sortie de l'amplificateur **30**. La borne inverseuse et la borne non-inverseuse de ce dernier sont par ailleurs connectées respectivement au nœud *S* et à une tension constante *VBUS.* La tension *VBUS* constitue ainsi une référence pour les signaux de sortie, et est comprise entre *VDET* et *VSK*. Un interrupteur **34**, piloté par un signal *Reset* est également prévu en parallèle du condensateur **32**, pour la décharge de celui-ci. Les sorties des CTIA **28** sont enfin par exemple connectées à des échantillonneurs-bloqueurs (*Sample and Hold*) **36** respectifs pour la délivrance des tensions *Vout* des CTIA en mode multiplexé au moyen d'un multiplexeur **38** vers un ou des amplificateur(s) série de sortie **40**. Il peut être également intégré en sortie des moyens de numérisation par convertisseurs analogique - numérique (*ADC* en anglais).

Le détecteur **10** comprend enfin une unité de séquencement **42** commandant les différents interrupteurs décrits précédemment. En fonctionnement, la matrice **12** est lue ligne par ligne. Pour lire une ligne de la matrice **12**, les interrupteurs **20** de la ligne de pixels **14** sont fermés et les interrupteurs **20** des autres lignes sont ouverts.

Après une phase de décharge des condensateurs des CTIA en pied de colonne, réalisée par la fermeture des interrupteurs **34** au moyen du signal *Reset* suivi de leur ouverture, il est ainsi obtenu un circuit tel que représenté sur la figure 2 pour chaque pixel de la ligne en cours de lecture. Un courant $I_{ac}$ circule dans le bolomètre de détection **16** du pixel sous l'effet de sa polarisation en tension par le transistor MOS **18,** et un courant $I_{cm}$ circule dans le bolomètre de compensation **24** de la structure de compensation sous l'effet de sa polarisation en tension par le transistor MOS **26**. Ces courants sont soustraits l'un de l'autre au niveau du nœud *S*, et la différence de courants résultante est intégrée par le CTIA **28** pendant une durée d'intégration prédéterminée $T_{int}$. La tension de sortie *Vout* du CTIA **28** représente ainsi une mesure de la variation de la résistance du bolomètre de détection **16** provoquée par le rayonnement incident à détecter, puisque la partie non utile du courant $I_{ac}$ liée à la température du substrat est compensée, au moins en partie, par le courant $I_{cm}$ spécifiquement produit pour reproduire cette partie non utile.

Usuellement, les tensions de polarisation des bolomètres de détection **16** et de compensation **24** sont ajustées au moyen des transistors **18** et **26** de manière à positionner le signal de sortie *Vout* dans la dynamique électrique $D_{el}$ de l'intégrateur **28**, à une température de référence donnée, usuellement une température de référence moyenne par rapport à la gamme de température opérationnelle du détecteur, notamment une température de référence proche de 300°K. Lorsque la température ambiante du détecteur **10** évolue, la température du substrat évolue également en raison de l'absence de régulation thermique, et donc également la température des bolomètres de détection **16**. Toutefois, les bolomètres de compensation **24** étant thermalisés au substrat, ils subissent également une variation de température résultant de la variation de température du substrat. Les courants qui parcourent les bolomètres de détection et de compensation se compensent donc naturellement au premier ordre lorsque la température ambiante du détecteur, et donc celle du substrat, change. Une réjection substantielle de la température du substrat, également désignée sous l'expression « température plan focal » (*TPF*), est ainsi obtenue.

Si, dans l'idéal, une réjection parfaite est obtenue quelle que soit la température du substrat, en pratique, des limitations apparaissent lorsque les variations, notamment positives, de température par rapport à la température de référence dépassent quelques dizaines de degrés.

Plus particulièrement, les tensions de polarisation $V_{ac}$ et $V_{cm}$ des bolomètres de détection **16** et de compensation **24** sont réglées pour que la moyenne des tensions de sortie du détecteur lorsque ce dernier est exposé à une scène uniforme de température égale à la température de référence, ou « scène de référence », soit positionnée dans la dynamique électrique de l'intégrateur **28** à une position particulière, jugée optimale, de cette dynamique. Les tensions de sortie devant une scène uniforme sont usuellement désignées sous l'expression de « niveaux continus », et la moyenne spatiale de ces tensions est usuellement désignée sous l'expression de « niveau continu moyen ».

Lorsque le détecteur est en service, c'est-à-dire observe une scène quelconque, pour une température du substrat voisine de la température de référence, les tensions de sortie *Vout* du détecteur exposé à la scène à observer diffèrent donc du niveau continu moyen, notamment en raison de l'échauffement des bolomètres sous l'effet du rayonnement incident en provenance de la scène observée et de dispersions intrinsèques des caractéristiques des bolomètres **16**. Le niveau continu moyen est donc positionné « en usine » (avant mise en service) dans la dynamique de lecture de telle manière que ces écarts de tensions de sortie par rapport au niveau continu moyen soient dans la dynamique de lecture pour un maximum de conditions d'observation usuellement rencontrées lors de l'utilisation du détecteur. Usuellement, le niveau moyen n'est ainsi pas centré dans la dynamique de lecture mais plutôt positionné, pour le cas de polarité de circuiterie proposé, dans le tiers bas de la dynamique, de manière à favoriser l'observation de points plus chauds que la température du fond ambiant.

En outre, comme dit précédemment, les bolomètres de compensation sont prévus pour compenser le courant de mode commun parcourant les bolomètres de détection pour une gamme aussi étendue que possible de température du plan focal. Dans le cas idéal où la compensation en température est parfaite, le niveau continu moyen, lorsque le détecteur observe une scène au voisinage de la température plan focal, ne varie donc pas avec cette température et reste donc positionné de manière idéale dans la dynamique de lecture.

Or, on observe que ce niveau moyen évolue malgré tout avec la température du substrat, et ce dans des proportions importantes. En outre, les bolomètres de détection **16** présentent une dispersion intrinsèque de leurs caractéristiques, notamment une dispersion dite « d'offsets » caractérisée par des tensions de sortie du détecteur différentes devant une scène uniforme, qui évolue en fonction de la température du substrat.

Le résultat de ces évolutions est l'apparition de la saturation des intégrateurs **28** pour une proportion significative des bolomètres de détection **16** au-delà d'une température particulière du substrat. Au-delà de cette température, la dynamique de scène du détecteur devient donc nulle. En effet, la dynamique de scène $D_{sc}$, grandeur essentielle du détecteur, est définie par l'amplitude de la variation de température d'un point quelconque de scène qui forme un signal utilisable en sortie, c'est-à-dire dans la dynamique électrique du détecteur.

De fait, les phénomènes indiqués précédemment limitent la gamme opérationnelle de températures du détecteur. Pour bien comprendre ces limitations, il convient de développer les divers phénomènes enjeu.

Les inventeurs ont observé que l'évolution du niveau continu moyen avec l'évolution, et plus particulièrement l'élévation de la température du substrat, est liée en particulier au phénomène dit d'« auto-échauffement » des bolomètres de détection 16 par effet Joule sous l'effet de la polarisation de lecture. En effet, la fréquence trame $f_t$, à savoir le nombre d'images complètes formées par seconde, est habituellement de 30, de 50 ou de 60 Hz, ce qui conduit à une récurrence d'adressage des bolomètres de détection **16** de 16 à 32 ms. A chaque récurrence, une puissance Joule $P_J$ égale au premier ordre à $V_{ac}^2/R_{ac}$ est dissipée dans les bolomètres **16**, ce qui produit un échauffement pendant chaque période $T_{int}$ égal à $T_{int} \cdot P_J/C_{th}$, où $C_{th}$ est la capacité calorifique du bolomètre **16**. Les grandeurs habituelles du domaine conduisent à un échauffement de l'ordre d'une dizaine de degrés du bolomètre **16** à l'issue de chaque impulsion de lecture.

Or, la constante de temps thermique des bolomètres **16** est typiquement de l'ordre de 8 à 20 ms. Il en résulte que les bolomètres de détection **16** n'ont pas le temps de refroidir et de retrouver une température d'équilibre proche de celle du substrat avant de subir une nouvelle polarisation. Ainsi, la température d'équilibre dynamique moyenne de la membrane d'un bolomètre **16** est d'habitude sensiblement plus élevée d'une grandeur $\Delta T$ de plusieurs degrés que la température du substrat à laquelle sont maintenus les bolomètres de compensation **24**. Du fait que cet écart est proportionnel à $P_J$ donc à $1/R_{ac}$, et que la résistance $R_{ac}$ des bolomètres diminue avec la température à raison d'environ 2% par degré pour les matériaux thermométriques usuels à coefficient de température négatif, il résulte que l'élévation moyenne de température $\Delta T$ entre les bolomètres de détection **16** et le substrat (les bolomètres de compensation **24**) augmente avec la température du substrat.

En conséquence, les bolomètres de détection **16** et de compensation **24** parcourent des courbes de résistance *R(TPF)* qui se décalent progressivement lorsque la température du substrat s'écarte de la température de référence.

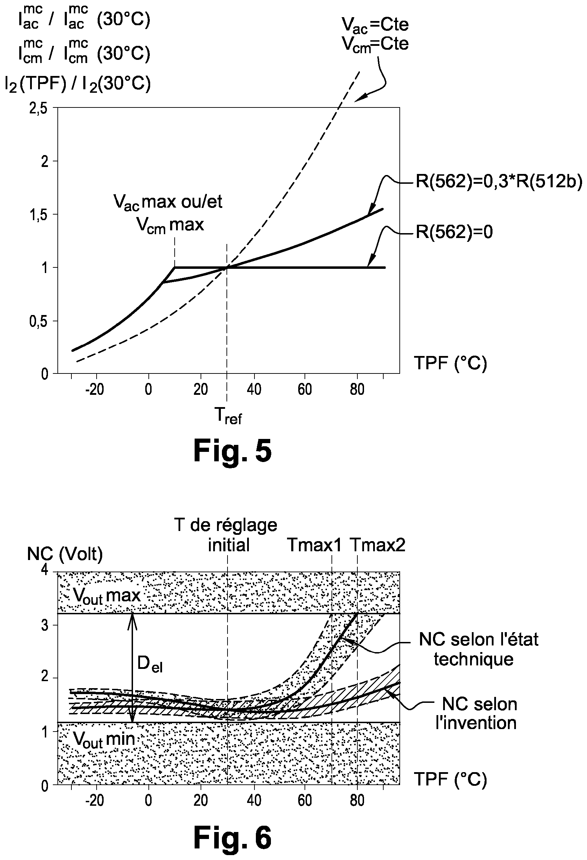

Finalement, la grandeur $(I_{ac}(t) - I_{cm}(t))$ qui définit le niveau continu moyen après intégration sur la durée $T_{int}$ par les CTIA, croit donc régulièrement lorsque la température du substrat évolue au-delà de la température de référence. C'est pour l'essentiel l'origine du déplacement du niveau continu moyen en fonction de la température du substrat tel que représenté à la courbe « *NC* de l'état de la technique » de la figure 6.

Une autre source d'évolution du niveau continu moyen *NC* avec la température du substrat est liée à la nature et la géométrie respectives des éléments électroniques de polarisation, usuellement constitués de transistors MOS. En effet, en raison de l'équilibrage nécessaire des tensions disponibles dans les deux branches bolométriques de détection et de compensation, la tension aux bornes du bolomètre de détection **16** est contrôlée par un NMOS, et la tension aux bornes du bolomètre de compensation **24** est contrôlée par un PMOS, ou inversement. Ces transistors, en plus d'être de type opposé, présentent chacun des géométries particulières, notamment en termes de largeur et longueur de canal, déterminées en priorité selon des contraintes contradictoires d'encombrement géométrique et de limitation du bruit électronique. Il s'ensuit que le comportement respectif en température de ces transistors, en termes de courant résultant respectivement dans les deux branches bolométriques, c'est à dire en termes de dérive du *NC* moyen en fonction de la température du substrat, n'est ordinairement pas idéal.

Il résulte de ces phénomènes évoqués de manière non exhaustive, que le *NC* moyen croise l'une ou l'autre limite de la dynamique électrique de sortie de l'intégrateur **28**, d'où une saturation généralisée du signal, dès que la température ambiante dépasse quelques dizaines de degrés au-delà de la température de référence utilisée pour le préréglage initial des tensions de polarisation. De fait, ces diverses contributions différentielles dans chaque branche limitent la dynamique de scène $D_{sc}$ observable, sans même considérer les phénomènes spatialement dispersifs.

Une autre limitation est liée à la dispersion naturelle des valeurs des résistances bolométriques de détection et de compensation. En effet, le signal *Vout* brut devant une scène à température uniforme se distribue selon une répartition résultant de la dispersion naturelle combinée des résistances de détection et de compensation.

Par exemple, une distribution de résistances $R_{ac}$ des bolomètres de détection **16** pourtant excellente de +/- 1,5% (correspondant à +/- $3\sigma$/m), dont la valeur moyenne m serait compensée à hauteur de 90% par un courant de compensation de mode commun lui-même dispersé à hauteur de +/- 1,5% (correspondant à +/- $3\sigma$/m), conduit à une variation relative statistique sur le courant différentiel supérieure à +/- 20% (correspondant à +/-$3\sigma$/m). Dans des conditions de réglages des courants de polarisation, de gain d'un intégrateur **28**, défini par la capacité $C_{int}$ **32**, et de durée d'intégration $T_{int}$ usuelle de ce type de circuit, cette dispersion de courant différentiel en entrée représente aisément 0,3 V à 0,5 V de dispersion spatiale $\Delta NC$ du niveau continu *NC* en étendue, à comparer à la dynamique électrique totale $(D_{el})$ de l'ordre de 2 à 3 V habituellement disponible en sortie de l'intégrateur **28**.

Cette distribution limite donc déjà sévèrement la dynamique utile de scène, définie comme l'espace résiduel de tension entre les limites de saturation de la sortie $(D_{el})$ diminué de la largeur $\Delta NC$ de la distribution de *NC* estimée précédemment, divisé par la réponse (ou responsivité) moyenne $\mathfrak{R} = dNC/dT_{sc}$ du détecteur, où $T_{sc}$ est la température de scène :

$$D_{sc} = (D_{el} - \Delta NC) / \mathfrak{R} \qquad (1)$$

Lorsque la température du substrat augmente, la dispersion relative des diverses résistances bolométriques se maintient au mieux essentiellement inchangée, en admettant que le coefficient de température *TCR* de chaque bolomètre est identique, ce qui n'est vrai qu'au premier ordre. En revanche, toutes les résistances diminuent très sensiblement, du fait du *TCR* ordinairement négatif, de l'ordre de -2%/K des matériaux thermométriques usuels. De ce fait, la dispersion absolue des courants de polarisation, c'est-à-dire aussi des niveaux de sortie *NC,* augmente progressivement avec la température du substrat.

Une autre limitation est liée aux dispersions naturelles de réponse, laquelle apparait au dénominateur dans la relation (1), habituellement d'origine technologique des bolomètres actifs **16**. Ces dispersions participent aussi très significativement à la limitation de la dynamique de scène, d'autant plus que la scène observée est à température élevée.

Diverses techniques ont été décrites dans l'art antérieur pour compenser les variations globales de niveau continu moyen ou/et les dispersions d'offset.

Selon une première technique, par exemple décrite dans le document US 6 433 333, les corrections sont obtenues au moyen d'une série de pré-calibrations en usine à diverses températures.

Une autre technique, enseignée par le document US 6 690 013, met en œuvre une estimation modélisée des corrections à apporter en fonction de la température du substrat.

Une autre technique encore consiste à filtrer temporellement les composantes fixes du signal, selon par exemple le document WO 2007/106018.

Toutefois, toutes ces techniques se basent sur une correction appliquée après la formation des signaux par le circuit de lecture. Il en résulte que bien qu'efficaces en termes de stabilité et de dispersion du signal corrigé, le problème de la perte progressive de dynamique de scène lorsque la température ambiante augmente n'est pas traité.

Pour tenter de repousser cette limitation, une autre classe de techniques a été développée, dont l'objet est de corriger les perturbations liées à la température du substrat en amont de la formation des signaux par les circuits de lecture.

Ainsi les documents US 5 756 999 et US 6 028 309 (ou WO9835212) décrivent la correction de la dispersion des offsets des bolomètres de détection par l'application d'une polarisation variable de ceux-ci. En effet, le signal issu d'un bolomètre de détection dépend directement du courant le traversant. En modifiant ce courant, on modifie ainsi le niveau continu moyen de sortie et donc la valeur de son offset. Toutefois, ce type de correction nécessite un protocole de calibration et de mise en œuvre contraignant, qui nécessite une circuiterie complexe à convertisseurs digital-analogique associés à des mémoires externes au circuit de lecture, pour gérer à chaque trame la polarisation individualisée de chaque bolomètre. Par ailleurs, la modification en service des polarisations décale de manière spatialement distribuée, c'est-à-dire non uniforme, les réglages de fonctionnement des membranes suspendues par rapport aux conditions de calibration en usine, et conduit à une perte de précision, variable selon les conditions ambiantes, sur des corrections de gain initialement calibrées en usine. Il en résulte une altération de la qualité des images.

Une autre technique destinée à compenser les variations de niveau continu moyen est décrite dans le document US 7 417 230. Dans ce document, aucune structure de compensation de mode commun n'est associée aux bolomètres de détection. Cette technique utilise un signal de sortie $S_{out}$ moyen des bolomètres de détection pour modifier de manière dynamique par rétroaction la polarisation appliquée aux bolomètres de détection. Des formes de réalisation particulières mettent en œuvre des bolomètres thermalisés au substrat fonctionnant comme sondes de température à partir desquelles est établi un signal de sortie particulier indépendant injecté à travers une boucle de rétroaction sur la ou les tensions de polarisation des bolomètres de détection. Cependant, cette technique supplée d'abord l'absence de bolomètre thermalisé de compensation directement dans la formation du signal.

Or, une limitation essentielle liée à l'absence de bolomètre de compensation dans la « branche d'offset » réside dans la nécessité de réduire la tension de polarisation des bolomètres de détection lorsque la température du substrat augmente, sensiblement dans la même proportion que diminue la résistance du bolomètre de détection. Ce mode revient en fait essentiellement à opérer la rétine sous courant constant. Or, le rapport signal sur bruit d'un bolomètre se dégrade sensiblement lorsque la tension de polarisation diminue. Il en résulte que les performances du détecteur selon cette technique se dégradent avec la température plus rapidement que si la polarisation était maintenue au voisinage de son point de réglage nominal et optimal en usine. De plus, le principe dynamique de la rétroaction conduit à éliminer du signal utile les variations liées à la température moyenne de la scène. Il n'y a alors plus de moyen direct de connaître cette température, autrement dit un tel système n'est pas applicable en thermographie.

Il demeure donc un besoin de corriger substantiellement cette limitation de dynamique de scène des détecteurs bolométriques non régulés en température, de manière à disposer d'objets capables de fonctionner de manière satisfaisante très loin de la température de références utilisée pour le réglage du détecteur.

## EXPOSE DE L'INVENTION

L'invention a pour but de proposer un détecteur bolométrique à base de membranes bolométriques suspendues au-dessus d'un substrat, comportant une structure de compensation bolométrique de mode commun, dont la dynamique de scène est exploitable sur une gamme étendue de températures du substrat, et utilisable à la fois en imagerie et en pyrométrie infrarouge.

A cet effet, l'invention a pour objet un détecteur bolométrique pour la détection d'un rayonnement infrarouge tel que défini dans la revendication 1 et comprenant une matrice de bolomètres de détection comprenant chacun une membrane bolométrique suspendue au-dessus d'un substrat, comprenant :

- associé à chacun des bolomètres de détection :

  o une branche de détection comprenant le bolomètre de détection et un circuit de polarisation pour régler la tension aux bornes dudit bolomètre de détection en fonction d'une consigne de tension ;
  o une branche de compensation comprenant un bolomètre de compensation porté sensiblement à la température du substrat, et un circuit de polarisation pour régler la tension aux bornes du bolomètre de compensation en fonction d'une consigne de tension ; et
  o un intégrateur pour générer une tension en intégrant une différence entre le courant circulant dans le bolomètre de détection et le bolomètre de compensation, ledit intégrateur présentant une dynamique électrique de sortie prédéterminée ;

- un circuit de commande des consignes de tension des circuits de polarisation des branches de détection et de compensation.

Selon l'invention, le circuit de commande des consignes de tension comporte :

- un circuit de génération d'une grandeur dépendant d'une température du substrat, comprenant :

  o au moins un bolomètre porté sensiblement à la température du substrat ; et
  o un circuit de polarisation dudit au moins un bolomètre, la polarisation dudit au moins un bolomètre générant ladite grandeur ;

- un circuit de génération des consignes de tension des branches de détection et de compensation en fonction de ladite grandeur, de manière à ce que lorsque la matrice de bolomètres est exposée à une scène uniforme de référence, la moyenne des différences entre les courants circulant dans les bolomètres de détection et les bolomètres de compensation est comprise dans la dynamique des intégrateurs pour une gamme de températures du substrat comprise entre -30°C et + 90°C.

Par « associé », on entend la formation d'un circuit comportant une branche de détection, une branche de compensation et un intégrateur lors de la lecture du bolomètre de détection, une branche de compensation pouvant être prévue pour plusieurs branches de détection, par exemple pour chaque colonne de la matrice, ou pour chaque branche de détection.

En d'autres termes, les tensions de polarisation sont modifiées pour obtenir une différence entre les courants de mode commun de détection et de compensation résultant en des tensions de sortie dans la dynamique électrique des intégrateurs. La valeur de ces courants de mode commun dépend en effet des tensions appliquées aux bornes des bolomètres de détection et de compensation. De cette manière, le niveau continu moyen du détecteur évolue moins rapidement avec la température du détecteur que le niveau continu moyen des détecteurs de l'état de la technique, comme par exemple ceux illustrés en relation avec les figures 1 et 2, le détecteur étant ainsi capable de fonctionner dans une large gamme de température, notamment entre -30°C et +90°C.

En outre, seule la température du substrat est prise en compte pour le réglage des tensions de polarisation des bolomètres de détection. Notamment, le niveau continu *NC* n'est jamais mesuré ou estimé et pris en compte dans le réglage des tensions de polarisation des bolomètres. Essentiellement, les tensions de polarisations suivent des lois qui sont variables uniquement en fonction de la température du substrat. Les signaux de sortie du détecteur restent ainsi libres d'évoluer en fonction de la température moyenne de la scène, permettant ainsi une application à la fois en imagerie infrarouge et en pyrométrie infrarouge.

Par ailleurs, il convient de noter que la polarisation des bolomètres est toujours réalisée en tension spatialement uniforme et constante, l'information utile étant donc contenue dans le courant parcourant les bolomètres. En effet, la « lecture » d'un bolomètre consiste également selon l'invention à imposer à ce dernier une tension de polarisation impliquant la circulation d'un courant pendant une durée d'intégration prédéterminée $T_{int}$. Comme la durée d'intégration $T_{int}$ est très courte, de l'ordre de quelques dizaines de microsecondes pour un détecteur de format et fréquence trame standards (65μs maximum @ 60Hz en format 1/4VGA), la variation de la température du substrat observée pour une telle durée est donc nulle en pratique. La température étant sensiblement constante pendant l'intégration, les tensions de polarisation, qui ne varient sensiblement qu'en fonction de cette température, sont donc également constantes pendant ladite durée. Une variation notable de ces tensions ne peut apparaître en pratique que sur une échelle de temps de très nombreuses trames, représentant au moins quelques secondes, voire minutes, compte tenu de l'inertie thermique du substrat et des masses du boitier duquel il est habituellement solidaire précisément pour en limiter les variations rapides.

Selon un mode de réalisation, le circuit de génération génère des consignes de tension de manière à ce que :

- les courants $I_{ac}^{mc}$ circulant dans les bolomètres de détection suivent en temps réel une loi selon la relation :

$$I_{ac}^{mc} = A.\left(1 + f1(TPF)\right)$$

- les courants $I_{cm}^{mc}$ circulant dans les bolomètres de compensation suivent en temps réel une loi selon la relation :

$$I_{cm}^{mc} = B.\left(1 + f1(TPF)\right)\left(1 + f2(TPF)\right)$$

expressions dans lesquelles *A* et *B* sont des paramètres prédéterminés constants, et *f*1(*TPF*) et *f*2(*TPF*) sont des fonctions prédéterminées positives ou nulles de la température *TPF* du substrat, la fonction *f*2(*TPF*) étant bornée de manière à ce que le niveau continu soit compris dans la dynamique des intégrateurs.

Par « temps réel », on entend ici que la grandeur dépendante de la température du substrat et les consignes de tensions sont régulièrement mises à jour, par exemple une fois par trame, ou en continu lorsque la production de ces grandeurs est réalisées de manière analogique. En outre, comme décrit précédemment, les lois *f*1(*TPF*) et *f*2(*TPF*) sont variables sensiblement uniquement en fonction de la température *TPF*.

Selon un mode de réalisation, le circuit de génération génère des consignes de tension de manière à ce que le rapport $\dfrac{I_{ac}^{mc}}{I_{cm}^{mc}}$ entre le courant $I_{ac}^{mc}$ circulant dans les bolomètres de détection et le courant circulant $I_{cm}^{mc}$ dans les bolomètres de compensation est égal à

$$\frac{I_{ac}^{mc}}{I_{cm}^{mc}} = D \times \left(1 + f2(TPF)\right)$$

où *D* est un paramètre prédéterminé constant, et *f*2(*TPF*) est une fonction prédéterminée positive ou nulle de la température *TPF* du substrat.

Plus particulièrement, la fonction *f*2(*TPF*) est du second ordre, notamment inférieure à 0,1.

Plus particulièrement, la fonction *f*2(*TPF*) est croissante en fonction de la température *TPF* du substrat.

Selon l'invention, le circuit de génération de ladite grandeur comprend :

- un miroir de courant comprenant une première et une seconde branches, chaque branche comprenant une entrée et une sortie ;
- une source de courant constant connectée à l'entrée de la première branche du miroir de courant ;
- une première résistance connectée entre la sortie de la première branche du miroir de courant et un premier potentiel constant, la première résistance comportant un premier bolomètre porté sensiblement à la température du substrat, et de résistance sensiblement identique à celles des bolomètres de détection, et une résistance non bolo métrique connectée en série avec le premier bolomètre ;
- une deuxième résistance connectée entre la sortie de la seconde branche du miroir de courant et le premier potentiel constant, la deuxième résistance comportant un deuxième bolomètre, sensiblement identique au premier bolomètre, le courant circulant dans la deuxième branche du miroir de courant constituant ladite grandeur ; et
- une troisième résistance connectée entre l'entrée de la deuxième branche du miroir de courant et un second potentiel constant.

Plus particulièrement, la résistance non bolométrique de la première résistance est programmable sur une plage de valeur comprise entre 0 et 30% de la valeur de la résistance du bolomètre de la première résistance à une température de référence prédéterminée. Avantageusement, la résistance non bolométrique de la première résistance est réglée à une valeur particulière telle que la responsivité des bolomètres de détection est essentiellement constante sur une plage de température prédéterminée de la température TPF du substrat. En outre, l'énergie d'activation du matériau bolométrique mis en œuvre est voisine de 0,18 eV, et la valeur de la résistance non bolométrique de la première résistance est voisine de, ou égale à, 25% de la valeur de la résistance bolométrique de la première résistance.

Selon une variante de l'invention, le potentiel de la borne de la troisième résistance non portée au second potentiel, définit une consigne de tension pour les circuits de polarisation des branches de compensation, et le potentiel de la borne de la deuxième résistance non portée au premier potentiel constant définit une consigne de tension pour les circuits de polarisation des branches de détection.

Avantageusement, la troisième résistance comporte un troisième bolomètre porté sensiblement à la température du substrat, et de résistance sensiblement identique à celles des bolomètres de compensation. Notamment, la résistance du troisième bolomètre est programmable de manière à positionner le niveau continu dans la dynamique électrique des intégrateurs. En particulier, la troisième résistance comporte en série avec le troisième bolomètre, une résistance non bolométrique programmable dans une plage de 0 à 10% de la valeur de la résistance du troisième bolomètre à une température de référence prédéterminée.

Selon une variante de l'invention :

- le circuit de polarisation de chaque branche de détection est constitué d'un premier transistor MOS, ou « TMOS », connecté en série avec le bolomètre de détection de la branche de détection, entre le premier potentiel et un premier nœud de courant ;
- le circuit de polarisation de chaque branche de compensation est constituée d'un second TMOS connecté en série avec le bolomètre de compensation de la branche de compensation, entre le second potentiel et le premier nœud de courant de la branche de détection associée à la branche de compensation, et de polarité opposée à celle des premiers TMOS des branches de détection ;

▪ le circuit de commande comporte en outre un circuit d'application des consignes de tension aux circuits de polarisation, comportant :

  ◦ un quatrième bolomètre, sensiblement identique au troisième bolomètre ;
  ◦ un troisième TMOS, sensiblement identique aux deuxièmes TMOS des branches de compensation et connecté en série avec le quatrième bolomètre entre le second potentiel et un deuxième nœud de courant ;
  ◦ un cinquième bolomètre sensiblement identique aux premier et second bolomètres;
  ◦ un quatrième TMOS sensiblement identique aux premiers TMOS des branches de détection, et connecté en série avec le cinquième bolomètre entre le deuxième nœud de courant et le premier potentiel ;
  ◦ un premier amplificateur opérationnel, dont la borne non inverseuse est connectée au potentiel de la borne de la troisième résistance non portée au second potentiel, dont la borne inverseuse est connectée à la borne du quatrième bolomètre non portée au second potentiel, et dont la sortie est connectée à la grille du troisième TMOS ;
  ◦ un second amplificateur opérationnel dont la borne non inverseuse est connectée au potentiel de la borne de la deuxième résistance non portée au premier potentiel, dont la borne inverseuse est connectée à la borne du cinquième bolomètre non portée au premier potentiel, et dont la sortie est connectée à la grille du quatrième TMOS ;

▪ la grille du second TMOS de chaque branche de compensation est connectée au potentiel formé entre le quatrième bolomètre et le troisième transistor MOS;

▪ et la grille du premier TMOS de chaque branche de détection est connectée au potentiel entre le cinquième bolomètre et le quatrième TMOS.

Plus particulièrement, le dispositif comprend en outre :

▪ un premier circuit de traitement de la tension en sortie de l'intégrateur associé au bolomètre de détection ;
▪ un intégrateur, associé au circuit de commande et identique à l'intégrateur associé au bolomètre de détection, pour générer une tension en intégrant une différence entre le courant circulant dans le quatrième bolomètre et le courant circulant dans le cinquième bolomètre ;
▪ un second circuit de traitement de la tension en sortie de l'intégrateur associé au circuit de commande et identique au premier circuit de traitement ; et
▪ un convertisseur analogique-numérique pour convertir la différence entre les tensions en sortie des premier et second circuits de traitement.

Notamment :

▪ le circuit de polarisation de chaque branche de détection est constitué d'un premier transistor MOS, ou « TMOS », connecté en série avec le bolomètre de détection de la branche de détection, entre le premier potentiel et un premier nœud de courant ;
▪ le circuit de polarisation de chaque branche de compensation est constituée d'un second TMOS connecté en série avec le bolomètre de compensation de la branche de compensation, entre le second potentiel et le premier nœud de courant de la branche de détection associée à la branche de compensation, et de polarité opposée à celle des premiers TMOS des branches de détection ;
▪ le circuit de commande comporte en outre un circuit d'application des consignes de tension aux circuits de polarisation, comportant :

  o pour chaque branche de compensation, un premier amplificateur opérationnel dont la borne non inverseuse est portée au potentiel de la borne de la troisième résistance non portée au second potentiel, dont la borne inverseuse est connectée entre le bolomètre de compensation et le second TMOS de la branche de compensation, et dont la sortie est connectée à la grille du second transistor de la branche de compensation ;
  o pour chaque branche de détection, un second amplificateur opérationnel dont la borne non inverseuse est portée au potentiel de la borne de la troisième résistance non portée au premier potentiel, dont la borne inverseuse est connectée entre le bolomètre de détection et le premier TMOS de la branche de détection, et dont la sortie est connectée à la grille du premier TMOS de la branche de détection.

Selon un mode de réalisation de l'invention, le circuit de génération des consignes de tension comporte :

- un convertisseur analogique/numérique, connecté au circuit de génération de ladite grandeur, produisant une valeur numérique de ladite grandeur ;
  - une unité de traitement d'informations numérique produisant des valeurs numériques des consignes de tension en fonction de la valeur numérique de ladite grandeur ;
  - un convertisseur numérique/analogique, connecté à l'unité de traitement et produisant les consignes de tensions des circuits de polarisation en fonction des valeurs numériques des consignes.

Un autre objet de l'invention est de proposer un détecteur sensiblement plus tolérant que les détecteurs de la technique de référence au niveau des alimentations continues de fonctionnement. Il en résulte d'une part, un couple dynamique de scène - plage de température opérationnelle plus étendue, et d'autre part une amélioration des performances en termes de rapport signal sur bruit à un coût de fabrication amélioré.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

- la figure 1 est un schéma électrique d'un détecteur bolométrique infrarouge de l'état de la technique, déjà décrit ci-dessus ;
  - la figure 2 est un schéma électrique illustrant la lecture d'un bolomètre sensible du détecteur de la figure 1 à l'aide d'une structure de compensation ;
  - la figure 3 est un schéma électrique d'un détecteur bolométrique infrarouge selon l'invention ;
  - la figure 4 est un schéma électrique d'un premier mode de réalisation du circuit de commande des tensions de grille des transistors de polarisation du détecteur de la figure 3 ;
  - la figure 5 illustre des tracés de l'évolution relative des courants formés dans les diverses branches du détecteur selon l'invention et du détecteur selon l'état de la technique en fonction de la température du substrat ;
  - la figure 6 illustre des tracés de l'évolution du niveau continu moyen d'une rétine de bolomètres selon l'état de la technique et selon l'invention, en fonction de la température du substrat ;
  - la figure 7 est un schéma électrique d'un second mode de réalisation du circuit de commande des tensions de grille des transistors de polarisation du détecteur de la figure 3 ; et
  - la figure 8 est un schéma du circuit de lecture selon l'invention dans une configuration particulière de mise en œuvre.

## DESCRIPTION DETAILLEE DE L'INVENTION

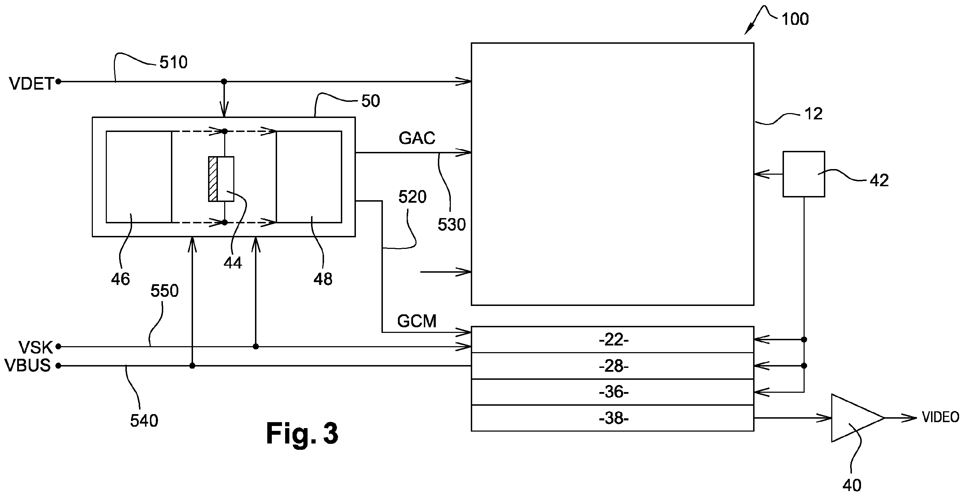

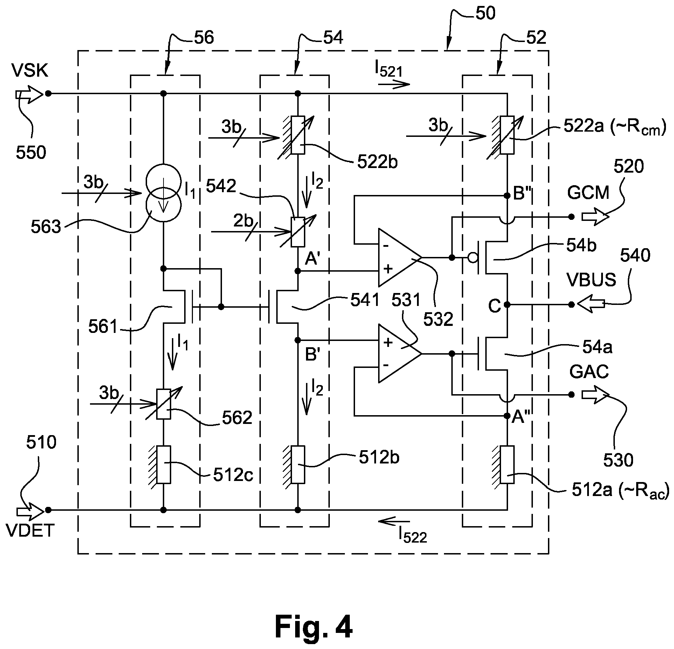

Il va à présent être décrit en relation avec les figures 3 et 4 un détecteur **100** selon l'invention dans le cadre d'une application au détecteur tel que décrit en relation avec les figures 1 et 2. Le détecteur **100** comporte ainsi une matrice **12** d'éléments unitaires de détection bolométriques **14**, ou « pixels », une structure de compensation **22**, un intégrateur **28** et un échantillonneur bloqueur **36** en pied de chaque colonne de la matrice **12**, un multiplexeur **38**, un amplificateur **40** et une unité de séquencement **42**.

Selon l'invention, le détecteur **100** comporte en outre un circuit **50** commandant la tension de grille $GAC$ des transistors MOS de polarisation **18** des bolomètres de détection **16**, la tension de grille $GAC$ étant délivrée aux transistors **18** via un premier bus de commande **530**, et la tension de grille $GCM$ des transistors MOS de polarisation **26** des bolomètres de compensation **24**, la tension de grille $GCM$ étant délivrée aux transistors **26** via un deuxième bus de commande **520.**

Le circuit de commande **50** comprend :

- un circuit bolométrique **44** comportant au moins un bolomètre essentiellement thermalisé au substrat ;
  - un circuit de polarisation **46** du au moins un bolomètre du circuit bolométrique **44** afin de générer une grandeur $MTPF$, par exemple un courant et/ou une tension, dépendant de la température du substrat, et retranscrivant en conséquence les variations de celle-ci ;
  - un circuit de génération des tensions **48** de grille $GAC$ et $GCM$ des transistors MOS de polarisation **18**, **26** en fonction de la grandeur $MTPF$ dépendant de la température du substrat produite par la polarisation du au moins un bolomètre du circuit **44**.

Notamment, le circuit **48** de génération détermine les consignes de tension de grille $GAC$ et $GCM$ en fonction de la grandeur $MTPF$, et donc les tensions $VA$ aux sources des transistor MOS **18** et les tensions $VB$ aux drains des transistors MOS **26**, de manière à ce que l'application des tensions *GAC* et *GCM* aux transistors de polarisation **18**, **26** produise des différences de courants de mode commun circulant dans les bolomètres de détection et de compensation telles que la moyenne des tensions résultant de l'intégration de ces différences par les intégrateurs **28** est comprise dans la dynamique électrique $D_{el}$ des intégrateurs **28** pour une gamme étendue de température, notamment une gamme de températures du substrat comprise entre -30 °C et +90 °C. En d'autres termes, le circuit **48** génère, en fonction de la température du substrat, des tensions de polarisation des bolomètres de détection **16** et des bolomètres de compensation **24** qui sont dépendantes l'une de l'autre. Plus particulièrement, les tensions de polarisation commandées par le circuit **48**, et donc corolairement les courants de mode commun circulant dans les bolomètres, présentent des variations relatives minimisées par rapport à l'état de l'état de la technique pour l'intervalle de températures précité.

Pour ce faire, le circuit **48** peut par exemple contenir des consignes de grille tabulées en fonction de la grandeur *MTPF* et déterminées lors d'un calibrage en usine en faisant varier la température du substrat et en soumettant la matrice de bolomètres **12** à une scène uniforme en température.

La figure 4 illustre un premier mode de réalisation du circuit **50** de commande analogique des tensions de grille des transistors de polarisation **18** et **26**. Le circuit **50** est alimenté en entrée entre les potentiels *VSK,* porté par une ligne d'alimentation **550**, et *VDET,* porté par une ligne d'alimentation **510**, et produit en sortie les tensions *GCM* et *GAC* véhiculées respectivement par les bus de commande **520** et **530**.

Le circuit **50** comporte trois branches de courant parallèles **52**, **54** et **56** connectées entre la tension *VSK* et la tension *VDET.* Le pilotage du circuit **50** s'opère à partir de la branche **56**, constituée d'un générateur de courant constant **563** programmable sur par exemple 3 bits, qui injecte un courant constant $I_1$ dans la branche **56** à travers un premier transistor MOS **561** et des résistances **512c** et **562** connectés en série.

Par courant constant, on entend que nominalement, il n'est pas besoin de modifier ce courant $I_1$ pour que le détecteur fonctionne selon l'invention sur toute la gamme de température projetée. Il est clair cependant que pour des raisons en dehors du contexte de l'invention, il peut être utile ou avantageux de modifier ce courant de pilotage, par exemple à chaque mise en route, ou même au cours d'une même séquence d'utilisation, par exemple à des fins d'ajustement de paramètres opératoires tels la fréquence trame ou la capacité d'intégration. De même, il n'est nullement exclu de modifier ce réglage en cours de fonctionnement, par exemple de l'asservir de manière incrémentale ou continue, via des dispositions analogiques ou/et algorithmiques de circuiterie interne ou externes au détecteur, à des fins d'optimisation de caractéristiques particulières du système.

La branche **54**, qui véhicule un courant $I_2$, est formée d'une première résistance **522b**, optionnellement d'une résistance additionnelle **542**, d'un second MOS **541** identique au transistor MOS **561** et de la résistance **512b** en série. Par ailleurs, les grilles des transistors MOS **561** et **541** sont connectées entre elles et au drain du transistor MOS **561**, formant ainsi un miroir de courant. Ledit miroir de courant est formé ici de manière traditionnelle par une paire de transistors MOS. De manière générale, on peut le décrire par une première branche (amont, ici formée du transistor MOS **561**) ayant une entrée (ici connectée au générateur de courant **653**) et une sortie (ici connectée aux résistances **512c** et **562**) et une seconde branche (aval, ici formée du transistor MOS **541**) ayant une entrée (ici connectée aux résistances **522b** et **542**) et une sortie (ici connectée à la résistance **512b**). La branche amont pilote le courant de la branche aval selon la configuration des éléments disposés dans la branche aval au moyen d'une liaison à courant statique nul (ici entre les grilles des transistors MOS **562** et **542**).

Les tensions *VA'* et *VB'* obtenues à la source **A'** et au drain **B'** du transistor MOS **541** sont reportées, à un offset négligeable près, via des entrées non inverseuses d'amplificateurs opérationnels **531** et **532** respectivement aux points **A"** et **B"** de la branche **52**, dans laquelle sont disposés en série une résistance **522a**, un transistor MOS **54b** identique aux transistors MOS **26** disposés dans les branches de compensation **22**, un transistor MOS **54a** identique aux transistors MOS **18** disposés dans les branches de détection **14**, et une résistance **512a**. Le transistor MOS **54a** voit sa grille pilotée par la sortie de l'amplificateur **531**, et le transistor MOS **54b** voit sa grille pilotée par la sortie de l'amplificateur **532**.

Finalement, les tensions à basse impédance formées en sortie des amplificateurs **531** et **532** sur les grilles des transistors MOS **54a** et **54b** sont véhiculées respectivement par les bus de commande **530** et **520** respectivement vers les grilles des transistors **18** et **26**. Les tensions de polarisation (*VA-VDET*) des bolomètres de détection **16** et les tensions de polarisation (*VSK-VB*) des bolomètres de compensation **24** sont donc sensiblement identiques à toute température respectivement aux tensions (*VA'-VDET*) et (*VSK-VB'*).

Les résistances **512a**, **512b**, **512c**, **522a** et **522b** sont formées de bolomètres thermalisés au substrat, de manière à suivre les variations de température dudit substrat. Par ailleurs, les résistances des bolomètres **512a**, **512b** et **512c** sont définies par construction à des valeurs sensiblement identiques ou proches de la résistance $R_{ac}$ des bolomètres de détection **16**. Les résistances **522a** et **522b** sont quant à elles de valeurs proches, et dans une variante particulière de l'invention, proches de la résistance $R_{cm}$ des bolomètres de compensation **24**. Par « proche », on entend que ces résistances sont modifiables indépendamment l'une de l'autre dans une plage de valeur *[(1-a).$R_{cm}$, (1+a).$R_{cm}$]*, où *a* est un nombre positif inférieur à 0,1, et de préférence de l'ordre de 0,05, au moyen de typiquement trois bits de réglage, dans un objectif qui sera précisé ultérieurement. L'ensemble des résistances élémentaires formant les résistances finales **522a** et **522b** est de type bolométrique.

La résistance **562** est ajustable mais non bolométrique, c'est-à-dire formée par des éléments résistifs standards de micro électronique variant très peu selon la *TPF* en comparaison des structures bolométriques. L'ajustement de la résistance **562** s'obtient par exemple au moyen de 3 bits programmables, dans une gamme indicative limitée entre 0 à 30% de la résistance **512c** à une température de référence de par exemple 30°C. La résistance additionnelle **542** est également non bolométrique et réglable sur par exemple 3 bits, permettant d'ajuster sa valeur entre 0% et typiquement quelques %, par exemple 5% de la résistance **522b**.

La tension *VBUS* de référence des intégrateurs **28** est appliquée au point **C** de la branche **52** entre les transistors MOS **54a** et **54b**, de manière à évacuer ou injecter le différentiel de courant $I_{522} - I_{521}$ qui apparait dans le cas général entre les demi-branches supérieure et inférieure de la branche **52,** afin que les potentiels des nœuds **A"** et **B"** s'établissent aux points de repos souhaités des nœuds **A** et **B** des branches de détection **14** et de compensation **22**.

On déduit du potentiel des grilles des transistors MOS **541** et **561**, exprimé dans les deux demi-branches inférieures des branches **54** et **56** vues côté source des transistors MOS **541** et **561,** c'est-à-dire côté sorties des branches amont et aval du miroir de courant, la relation :

$$(R(512c)+R(562)).I1 + VGS(561) = R(512b).I2 + VGS(541) \qquad (1)$$

où *R* exprime la résistance, *VGS(561)* et *VGS(541)* sont les tensions grille-source des transistor MOS **561** et **541**, substantiellement identiques puisque les transistors MOS **561** et **541** sont identiques. Les résistances des bolomètres **512c** et **512b** étant sensiblement identiques ou proches, on déduit que le courant $I_2$ parcourant la branche **54** s'exprime selon la relation :

$$I_2 = (1+R(562)/R(512b)).I_1 \qquad (2)$$

Lorsque la résistance non bolométrique **562** est réglée à zéro et forme donc un court-circuit, le courant $I_2$ reste égal au courant $I_1$ quelle que soit la température du substrat. En revanche, lorsque la résistance **562** est réglée à une valeur non nulle, le courant $I_2$ évolue différemment du courant $I_1$ lorsque la température du substrat varie. Le courant $I_2$ est donc une grandeur dépendant de la température du substrat, et qui restrancrit les variations de cette dernière.

Plus précisément, selon la relation d'Arrhenius la résistance *R(512b)* du bolomètre **512b** s'exprime selon la relation :

$$R(512b) = R_0(512b).exp(Ea/kT) \qquad (3)$$

où $R_0(512b)$ est la valeur asymptotique de la résistance *R(512b)* à température infinie, *Ea* est l'énergie d'activation du matériau bolométrique du bolomètre, et *k* est la constante de Boltzmann.

La température *T* du bolomètre **512b** étant égale à la température *TPF* du substrat, on déduit ainsi des relations (2) et (3) l'évolution du courant $I_2$ selon la température du substrat selon la relation :

$$I_2 = I_1\left(1+\frac{R(562)}{R(512b)@T_{ref}}.\exp\frac{Ea}{k}\left(\frac{1}{T_{ref}}-\frac{1}{TPF}\right)\right) = I_1.(1+f1(TPF)) \qquad (4)$$

où *TPF* est la température du substrat, $R(512b)@T_{ref}$ est la résistance du bolomètre **512b** à la température de référence $T_{ref}$. Notamment, la loi *f1(TPF)* est positive et croissante et est variable sensiblement uniquement en fonction de la température *TPF* du substrat. Dans ce qui suit, la notation *R@T* signifie valeur de la résistance « *R* » à la température « *T* ».

En raison de la conception particulière du circuit **50**, on note que le courant $I_2$, et corollairement les courants $I_{521}$ et $I_{522}$ circulant dans la branche de courant **52,** représentent substantiellement le courant de mode commun indépendant de l'éclairement de la matrice **12** des bolomètres de détection **16** formé dans les branches de détection et de compensation illustrées à la figure 2, respectivement parcourues par les courants de mode commun.

Plus particulièrement, on montre aisément, pour l'instant en écartant ou négligeant le phénomène d'auto-échauffement apparaissant sur les bolomèters de détection **16**, que pour une résistance **542** nulle, le courant de mode commun de détection $I_{ac}^{mc}$ circulant dans les bolomètres de détection **16** et le courant de mode commun de compensation

$I_{cm}^{mc}$ circulant dans les bolomètres de compensation **24** sont proportionnels au courant $I_2$ selon les relations :

$$I_{ac}^{mc} = A.I_2 = A.I_1.\left(1 + f1(TPF)\right) = A_{ac}.\left(1 + f1(TPF)\right) \qquad \textbf{(5)}$$

$$I_{cm}^{mc} = B.I_2 = B.I_1.\left(1 + f1(TPF)\right) = B_{cm}.\left(1 + f1(TPF)\right) \qquad \textbf{(6)}$$

où *A* et *B* sont des constantes.

Le courant $I_1$ étant par ailleurs choisi constant, le rapport $\dfrac{I_{ac}^{mc}}{I_{cm}^{mc}}$ est donc constant quelle que soit la température *TPF* du substrat. Avantageusement, le circuit **50** est conçu pour que le rapport $\dfrac{I_{ac}^{mc}}{I_{cm}^{mc}}$ soit égal à 1. Les tensions de polarisation des bolomètres de détection **16** et de compensation **24** diminuant lorsque la température du substrat augmente, l'écart en valeur absolue des courants de mode commun de détection et de compensation varie moins que dans la configuration de l'état de la technique avec des tensions de polarisation constante, et donc également le niveau continu moyen. En d'autres termes, les tensions *VA* et *VB* réglant respectivement la polarisation des bolomètres sensibles **16** et de compensation **24**, et corolairement les courants $I_{ac}^{mc}$ et $I_{cm}^{mc}$, sont dépendantes l'une de l'autre. Plus particulièrement, les tensions *VA* et *VB*, ou de manière équivalente les courants $I_{ac}^{mc}$ et $I_{cm}^{mc}$ se compensent l'une l'autre. Par exemple, lorsque le courant $I_{ac}^{mc}$ diminue, le courant $I_{cm}^{mc}$ diminue dans les mêmes proportions en raison de la constance du rapport $\dfrac{I_{ac}^{mc}}{I_{cm}^{mc}}$, et vice versa.

Comme cela est visible aux relations (3), (5) et (6), la pente des courants $I_2$, $I_{ac}^{mc}$ et $I_{cm}^{mc}$ en fonction de la température *TPF* du substrat, c'est-à-dire la « réactivité » de ces courants par rapport à la température du substrat, est notamment définie par le réglage de la résistance non bolométrique **562** par rapport à la résistance bolométrique **512b**. Sachant par ailleurs que la tension de polarisation des bolomètres de détection influe directement sur la réponse du détecteur, la résistance **562** permet donc par exemple de régler également cette sensibilité.

Le réglage de la résistance du bolomètre **522b** permet quant à lui d'établir le niveau continu moyen (*NC*) à une valeur adaptée dans la dynamique des intégrateurs **28**. En effet, les résistances moyennes des bolomètres de détection **16** et de compensation **24** à l'issue de leur processus de fabrication du détecteur, sont usuellement connues uniquement au premier ordre. Le réglage de la résistance du bolomètre **522b** permet d'ajuster la tension de polarisation dans la branche de compensation de manière à positionner de manière adéquate le niveau continu moyen dans la dynamique des intégrateurs **28**, au moins à la température de référence $T_{ref}$. En effet, la modification de la résistance du bolomètre **522b** résulte directement en un déplacement de la tension *GCM* en sortie du circuit **50**, et donc en un déplacement de la position du niveau continu moyen de sortie dans la dynamique des intégrateurs **28**.

L'énergie d'activation *Ea* du matériau sensible des bolomètres est ordinairement de l'ordre de 0,18 eV. La relation (4) montre qu'en réglant la résistance *R(562)* à 30% de la résistance *R(512b)@$T_{ref}$*, le courant $I_2$ est ainsi sensiblement égal à 1,3*$I_1$ à la température de référence $T_{ref}$, et décroît asymptotiquement vers $I_1$ à mesure que la température du substrat décroît en deçà de la température de référence. A l'inverse, lorsque la température du substrat augmente au-delà de la température $T_{ref}$, le courant $I_2$ augmente régulièrement pour atteindre environ 2*$I_1$ à 90°C pour une température de référence $T_{ref}$ de 30°C.

Le comportement du courant $I_2$ est illustré graphiquement plus en détail à la figure 5, sous forme normalisée à la valeur qu'il présente à la température de référence $T_{ref}$ = 30°C, en fonction de la température *TPF* du substrat, dans divers cas de réglage de la résistance d'ajustement. Comme décrit précédemment, les courants de mode commun de détection et les courants de mode commun de compensation sont proportionnels au courant $I_2$ pour une résistance **542** nulle, de sorte que les courbes représentées correspondent également à ces courants de mode commun normalisés respectivement à leur valeur à la température de référence $T_{ref}$.

Par ailleurs, la figure 5 illustre également, en traits pointillés, l'évolution du courant de mode commun $I_{ac}^{mc}$ circulant dans un bolomète de détection **16** normalisée à sa valeur à la température de référence $T_{ref}$ pour une polarisation constante en tension ($V_{ac}$ = *Cte* et $V_{cm}$ = *Cte*), telle que pratiquée usuellement selon l'état de la technique illustré aux figures 1 et 2.

Pour des températures basses du substrat, typiquement en-dessous de -10°C, les courants de mode commun de détection et de compensation deviennent très faibles, compte tenu de l'augmentation des résistances bolométriques, ce qui nuit à la sensibilité du détecteur car la capacité des intégrateurs **28** devient inadaptée. Pour des températures hautes du substrat au contraire, les courants de mode commun deviennent très élevés, et on observe dans l'état de la technique une saturation « prématurée » des intégrateurs **28** comme expliqué précédemment ainsi que des complications de linéarité liées au phénomène d'auto-échauffement, ou « *self-heating* », des bolomètres de détection sous l'effet de leur polarisation. De plus comme il a été détaillé précédemment, la dynamique de scène du détecteur devient rapidement très faible bien avant saturation, et ce d'autant plus tôt en température que les résistances des bolomètres de détection et/ou de compensation sont initialement dispersées.

Comme déjà indiqué précédemment, si la résistance **562** de la branche de pilotage **56** est programmée à une valeur nulle ou très faible, le courant circulant dans les branches **52** et **54** sont invariables en température, et la polarisation des bolomètres de détection **16** et de compensation **24** est de fait également constante en fonction de la température du substrat. Ce mode de réalisation présente néamoins l'avantage, du côté des hautes températures, de maintenir sensiblement constants les niveaux de courants à intégrer, ce qui élimine radicalement les problèmes de linéarité d'intégration, voire de saturation momentanée pendant l'intégration, liés à l'auto-échauffement des bolomètres de détection. En revanche, l'inconvénient majeur est un affaiblissement de la sensibilité du détecteur en raison de la baisse du coefficient en température *TCR* des bolomètres de détection et de compensation à mesure que leur température augmente.

A l'inverse, les diverses résistances bolométriques augmentent à mesure que baisse la température, jusqu'au point où l'amplitude de l'alimentation (*VSK-VDET*) devient insuffisante pour maintenir les courants de mode commun de détection et de compensation à leur valeurs réglées à 30°C. Ce point de saturation est indiqué sur la figure 5 par une limite en traits pointillés vers *TPF* = 10°C. En deçà de ce point, le comportement des divers courants rejoint l'état de l'état de la technique de référence, à tensions d'alimentation constantes et maximales.

Il convient de noter que la dissipation thermique à l'intérieur du boitier intégrant le détecteur, liée au fonctionnement du circuit, porte habituellement la température *TPF* du susbtrat à quelques 10 à 15 °C au dessus de la température ambiante à laquelle est soumis le boitier, de sorte que ce point de saturation de l'alimentation ne représente en fait pas une limitation notoire du domaine d'application efficace de l'invention. De plus comme déjà dit, le détecteur continue de fonctionner aux très basses températures, selon un régime différent mais non dégradé par rapport à l'état de la technique.

Lorsque la résistance **562** est programmée pour être non nulle, par exemple à une valeur de l'ordre de 30% de la résistance $R_{ac}$ (@ 30°C), et lorsque la température *TPF* du substrat descend en dessous du point de réglage de référence à 30 °C, les tensions de polarisation des bolomètres de détection et de compensation augmentent et les courants de mode commun de détection et de compensation diminuent. Inversement, lorsque la température *TPF* du substrat augmente au-delà de *TPF* = 30 °C, les tensions de polarisation des bolomètres de détection et de compensation diminuent et les courants de mode commun de détection et de compensation augmentent. La plage de fonctionnement satisfaisant du détecteur, sans qu'il soit besoin de modifier les réglages initiaux à la température de référence pour faire face à l'affaiblissement excessif ou au contraire à la saturation des divers courants fonctionnels, s'en trouve ainsi sensiblement étendue par rapport à l'état de la technique. L'exacerbation de la dispersion du niveau continu moyen *NC* à haute température, typique de la polarisation en tension, reste modérée, et le niveau de sensibilité optimale obtenu au point de référence initial est stabilisé sur une large gamme de températures opératoires du détecteur.

Par ailleurs, comme il sera complété ultérieurement, la modération de l'augmentation des courants de mode commun de détection et de compensation avec la température *TPF* du substrat tend à stabiliser la responsivité du détecteur, donc au moins à modérer la perte additionnelle de dynamique de scène qui en découle dans l'état de la technique.

La saturation de l'alimentation (*VSK-VDET*) apparaît également à basse température, mais à un point plus froid, typiquement de 5 °C que pour le mode de réalisation avec une résistance *R(562)* nulle ou très faible.

Il résulte avantageusement de ce montage que les tensions *GAC* et *GCM* produites sous basse impédance, respectivement en sortie des amplificateurs opérationnels **531** et **532**, sont telles qu'elles fournissent des tensions de polarisation aux bornes des bolomètres de détection **16** et de compensation **24** proportionnelles entre elles lorsque la température *TPF* du substrat varie exactement selon les potentiels des points **A"** et **B"** de la branche **52** du bloc **50**.

Selon une variante particulière de l'invention, la résistance non bolométrique **542** est définie par programmation sur un lien série à une valeur non nulle, mais modérée au maximum de l'ordre de quelques % de la valeur à la température de référence de la résistance du bolomètre **522b**. Ce réglage permet de déséquilibrer les courants $I_{522}$ et $I_{521}$, notamment en tempérant la variation en fonction de la température du substrat du courant $I_{522}$ par rapport à la variation du courant $I_{521}$, ce qui permet de compenser les conséquences de l'auto-échauffement, variable selon la température du substrat dans la branche de détection, sur la stabilité du niveau continu moyen *NC,* comme il a été discuté dans la section relative à l'état de la technique.

En effet, avec une résistance **542** non nulle, on a $I_2.(R(522b)+R(542)) = I_{521}.R(522a)$ d'une part, et $I_2.R(512b)$ $= I_{522}.R(512a)$ d'autre part. Les résistances des bolomètres **512a** et **512b** étant choisies sensiblement égales, $I_2 = I_{522}$ et :

$$\frac{I_{521}}{I_{522}} = \frac{R(522b)+R(542)}{R(522a)} = \frac{R(522b)}{R(522a)} \times \left(1 + \frac{R(542)}{R(522b)}\right)$$
$$= \frac{R(522b)}{R(522a)} \times \left(1 + \frac{R(542)}{R(522b)@T_{ref}}.\exp\frac{Ea}{k}\left(\frac{1}{T_{ref}} - \frac{1}{TPF}\right)\right) \qquad (7)$$

Que l'on peut reformuler selon la relation :

$$\frac{I_{521}}{I_{522}} = C(1 + f2(TPF)) \qquad (8)$$

Où C est une constante invariable en température proche de 1 dans le cas général et égale à 1 dans le cas particulier où le réglage du niveau continu moyen *NC* à la température de référence conduit à des valeurs identiques pour les résistances *R(522b)* et *R(522a)*. Le facteur *f2*, qui est positif, est par ailleurs du second ordre, c'est-à-dire petit devant 1 à la température de référence, mais croissant lorsque la *TPF* augmente au-delà de cette température. Notamment, le facteur *f2* est typiquement inférieur à 0,1.

Il est ainsi obtenu dans le cas général des courants de mode commun de détection $I_{ac}^{mc}$ et de compensation $I_{cm}^{mc}$ selon les relations :

$$I_{cm}^{mc} = C.B_{cm}.\left(1 + f1(TPF)\right)\left(1 + f2(TPF)\right)$$
$$I_{ac}^{mc} = A_{ac}.\left(1 + f1(TPF)\right) \qquad (9)$$

Dans la variante comportant une résistance **542** non nulle, le rapport $\frac{I_{ac}^{mc}}{I_{cm}^{mc}}$ n'est donc plus constant avec la température *TPF* du substrat à la différence de la variante dans laquelle la résistance **542** est nulle, puisque ce rapport s'exprime selon la relation $\frac{I_{cm}^{mc}}{I_{ac}^{mc}} = D.\left(1 + f2(TPF)\right)$, où D est une constante égale au rapport $\frac{C.B_{cm}}{A_{ac}}$. Toutefois, en raison de la faible valeur relative de la résistance **542**, de l'ordre de quelques pourcents de la résistance du bolomètre **522b**, le rapport $\frac{I_{cm}^{mc}}{I_{ac}^{mc}}$ varie peu avec la température *TPF* du substrat, permettant ainsi de stabiliser substantiellement le niveau continu moyen *NC* dans la dynamique des intégrateurs **28**, comme cela sera décrit plus en détail par la suite. En revanche, la fonction *(1+f2(TPF))*, bien que présentant des valeurs peu supérieures à 1, permet de corriger efficacement les écarts relatifs des parcours respectifs des résistances *R(T)* des bolomètres de détection **16** et de compensation **24** lorsque la température *TPF* du substrat varie, tels que précédemment discutés en relation avec l'auto-échauffement des seuls bolomètres de détection **16**.

En variante, et dans le cas général, il est aussi possible de prévoir un réglage de compensation des écarts d'énergie d'activation, ou tout autre phénomène conduisant à des décalages en température du niveau continu moyen, sur chaque demi-branche supérieure et inférieure de la branche **54** au moyen de l'insertion d'une résistance non bolométrique en série, si besoin avantageusement ajustable par programmation. On dispose ainsi des moyens de correction de stabilité en température du niveau continu moyen dans tous les cas possibles, aux dépens de la complexité du circuit, en particulier du nombre de bits de commande à instaurer pour sa mise en route optimisée.

Au demeurant, selon le mode de réalisation détaillé précédemment, en assignant par conception un incrément de valeur de résistance « LSB » de *0,005 à 0,01 \*R(522b)@30°C* de la résistance non bolométrique **542**, une dynamique de réglage de 2 bits suffit typiquement à corriger l'essentiel des écarts de courant liés à l'auto-échauffement différentiel.

En effet, il s'agit ici de parfaire au second ordre la stabilité du niveau continu moyen, déjà satisfaisante au premier ordre par l'asservissement du niveau continu moyen selon la température *TPF* du substrat, des tensions de polarisation, de manière corrélée sur les branches de détection et de compensation, pour obtenir une stabilité du niveau continu moyen dans une gamme étendue de températures du substrat.

Il est proposé ici comme cas général un circuit programmable au niveau de la résistance **542**, qui permet d'optimiser la stabilité du *NC* en température dans une très large gamme de conditions de mise en œuvre du détecteur. Il est bien entendu que pour des conditions circonscrites de mises en œuvre, dit « périmètre opératoire » en termes en particulier de courant de polarisation $I_1$ à la température de référence, de fréquence de trame etc., une valeur fixe prédéterminée de la résistance **542**, définie par exemple empiriquement après étude de la stabilité du *NC* dans ce périmètre opératoire, au moyen d'un circuit d'étude ou de simulations suffisamment élaborées. Il n'est ensuite nul besoin de bits additionnels de commande, le circuit ainsi calibré peut être simplifié sans perte d'efficacité.

La valeur de la résistance **562** pour sa part, permet également de compenser la variation de responsivité du détecteur en fonction de la température *TPF* du substrat. En effet, la responsivité $\Re$ d'un détecteur bolométrique lu par intégration de courant s'exprime dans le cadre de l'invention selon la relation :

$$\Re = K.TCR.I_{ac}$$

où *K* est un paramètre constant. En exprimant la réponse moyenne en fonction de la température *TPF* du substrat, de manière normalisée relativement à sa valeur à la température de référence $T_{ref}$, et considérant par ailleurs en vertu de la relation d'Arrhenius que $TCR = -Ea/(k.TPF^2)$, on déduit de la relation précédente la relation :

$$\frac{\Re(\text{TPF})}{\Re(\text{T}_{\text{ref}})} = \frac{I_{ac}^{mc}(TPF)}{I_{ac}^{mc}(\text{T}_{\text{ref}})}.\left(\frac{\text{T}_{\text{ref}}}{TPF}\right)^2 \qquad \textbf{(10)}$$

Le premier terme du membre de droite représente l'accroissement relatif du courant de polarisation des bolomètres de détection **16** entre les températures $T_{ref}$ et *TPF*, dont on sait régler l'amplitude au moyen du réglage de la résistance **562**. Le second terme représente l'affaiblissement du coefficient en température *TCR* des bolomètres de détection **16** entre les température $T_{ref}$ et *TPF*, imposé par le matériau thermométrique, supposé de type semiconducteur tel du silicium amorphe ou des oxydes de vanadium par exemple. Ces deux termes jouent donc en sens opposés lorsque la température *TPF* du substrat varie. Il existe donc une valeur particulière de la résistance non bolométrique **562**, dont le premier terme dépend, qui annule la variation relative et absolue de la responsivité $\Re$' au voisinage de la température de référence $T_{ref}$. Sur un intervalle de température *(TPF - Tref)* étendu, notamment un intervalle de plusieurs dizaines de degrés, il existe de même une valeur particulière de la résistance **562** dépendant au second ordre de l'intervalle considéré de températures du substrat, puisque les deux termes de variation relative évoluent selon des lois différentes, qui minimise la variation relative et absolue de responsivité sur cet intervalle.

En d'autres termes, il existe un point de réglage du circuit **50** qui minimise l'excursion du produit exprimé dans le membre de droite de la relation (10), de part et d'autre de la valeur 1, c'est-à-dire qui produit une compensation substantielle des variations de coefficient de température *TCR* dans la gamme de température du substrat d'intérêt, par une variation en sens inverse du courant de mode commun de détection $I_{ac}^{mc}$.

Ce point de stabilisation en température de la responsivité du détecteur est obtenu, pour une valeur d'énergie d'activation *Ea* de l'ordre de 0,18 eV, lorsque la résistance **562** est réglée au voisinage de *0,25\*R(522b)@30°C*. Un réglage un peu différent est mis en oeuvre pour optimiser la stabilité de la responsivité pour d'autres valeurs de l'énergie d'activation *Ea*, ou d'autres plages d'intérêt de températures *TPF* du substrat.

On obtient de fait avec ce réglage particulier, valable dans les conditions précisées ci-dessus, une stabilité de la responsivité meilleure que +/-2% entre 15°C et 90°C de température *TPF* du substrat, ou encore meilleure que +/-1% entre 20°C et 70°C de température *TPF* du substrat. Lorsque la résistance **562** est réglée au voisinage de *0,25\*R(522b)@30°C*, il n'est donc pratiquement plus besoin de calibrer en usine, comme il est pratiqué habituellement, la responsivité moyenne du détecteur en fonction de la température du substrat.

En d'autres termes, s'il est acceptable de se contenter d'une précision de l'ordre de 2% (resp. 1% selon les conditions proposées) il est possible d'opérer le détecteur ainsi réglé en mode thermographique (pyrométrique), c'est-à-dire de produire des données de sortie correspondant à une information de température absolue connue sur la scène, en se contentant d'une unique calibration à la température de référence. Il en résulte une économie substantielle de calibration initiale en usine, donc du coût de la caméra intégrant le détecteur selon l'invention.

Il a été décrit dans les modes de réalisation du circuit de commande **50**, un rapport maximal de 30% entre la résistance non bolométrique additionnelle **562** et la résistance du bolomètre **512c** à la température de référence. Ce rapport de l'invention n'est toutefois qu'indicatif. L'homme du métier retiendra selon l'ensemble des caractères particuliers du détecteur considéré, le rapport qui conviendra le mieux au but recherché, en termes de dispersion, dynamique, performance, stabilité de réponse ou tout autre paramètre fonctionnellement utile. Il est évidemment possible aussi de modifier ce rapport de manière récurrente ou dynamique sur un même détecteur, de manière à adapter ledit détecteur à divers usages ou conditions opératoires, même au cours d'une même séquence d'utilisation, puisque les éléments du circuit **50** sont aisément programmables. Cette adaptation pouvant se pratiquer au travers d'une commande directe de l'utilisateur, ou tout protocole, algorithme embarqué ou moyen adéquat mis en place à cette fin. A l'inverse, dans la mesure où ce réglage de la résistance **562** peut être considéré comme adéquat pour l'ensemble des conditions opératoires prévues pour le détecteur, il n'est nul besoin de former une structure programmable. Une disposition fixe optimisée du circuit **50** est parfaitement applicable et avantageuse pour simplifier le système et diminuer son coût.

La figure 6 illustre l'évolution du niveau continu moyen en fonction de la température *TPF* du substrat selon l'état de la technique illustré aux figures 1 et 2 et selon le détecteur venant d'être décrit lorsque la résistance **542** est nulle, c'est-à-dire sans compensation particulière des effets différentiels d'auto-échauffement au moyen du réglage de la résistance **542**.

Selon l'état de la technique, le réglage des tensions de grilles *GAC* et *GCM* des transistors MOS de polarisation **18** et **24** est effectué pour la température de 30 °C de manière à ce que le niveau continu moyen soit positionné en partie basse de la dynamique électrique des intégrateurs **28** pour tenir compte du fait que les signaux de sortie du détecteur augmentent pour le type de polarisation utilisée dans l'état de la technique lorsque la scène est plus chaude.

Aux basses températures, les courants de mode commun $I_{ac}^{mc}$ et $I_{cm}^{mc}$ diminuent sensiblement du fait du coefficient en température *TCR* négatif des bolomètres de détection **16** et de compensation **24**. En conséquence, le courant différentiel intégré faiblit aussi, et il s'ensuit que le niveau continu moyen varie peu. Par ailleurs, la responsivité des bolomètres de détection diminue en relation avec la résistance $R_{ac}$ des bolomètres de détection **16**, ce qui entraine une croissance inversement proportionnelle de la dynamique de scène $D_{sc}$. De fait, les basses températures ne posent pas de problème particulier dans l'état de la technique en termes de stabilité du niveau continu moyen et de dynamique de scène.

En revanche, du côté des températures élevées, le niveau continu moyen dérive, pour le cas de polarité de circuiterie retenu comme technique de référence, vers le haut de la dynamique électrique des intégrateurs **28**, comme cela est illustré par la courbe « *NC* selon l'état de la technique ». Au-delà d'une température du substrat notée « *Tmax2* », le niveau continu moyen est saturé. Dans une configuration typique de l'état de la technique, la dynamique électrique des intégrateurs **28** correspond à la gamme *Vout-min* = 1,2 V à *Vout-max* = 3,2 V, la saturation de la sortie des intégrateurs se produisant donc en deçà de 1,2 V et au-delà de 3,2 V. Le détecteur de l'état de la technique n'est donc plus utilisable au-delà de cette température *Tmax2.* En outre, à mesure que le niveau continu moyen se rapproche de la limite supérieure de la dynamique des intégrateurs **28**, la dynamique de scène diminue sensiblement.

En outre, comme précédemment décrit, les bolomètres de détection et de compensation présentent une dispersion de leur résistance, provoquant une dispersion des tensions de sortie devant une scène uniforme, ou dispersion « d'offset ». L'espace entre les courbes en pointillées représente un exemple typique de l'étendue de la dispersion d'offset des tensions de sortie devant la scène uniforme du détecteur de l'état de la technique. Comme décrit précédemment, cette étendue de dispersion croit régulièrement avec la température du substrat, et de fait, au-delà d'une température limite *Tmax1* sensiblement inférieure à la température limite *Tmax2*, le détecteur de l'état de la technique devient inutilisable car une partie au moins des signaux de la rétine est saturée. Cette perte de plage de température opérationnelle est évidemment d'autant plus importante que la dispersion d'offset est élevée.

Comme dit plus haut, lorsque la température du substrat s'élève au dessus de la température de référence, les résistances $R_{ac}$ et $R_{cm}$ des bolomètres de détection et de compensation diminuent en raison de leur coefficient en température *TCR* négatif. Selon l'invention, les courants de mode commun $I_{ac}^{mc}$ des bolomètres de détection **16** et les courants de mode commun $I_{cm}^{mc}$ des bolomètres de compensation **24** observent une variation corrélée selon une loi continue croissante, mais de manière sensiblement moins rapide, selon le réglage de la résistance **562**, que ce que produirait une polarisation en tension constante selon l'état de la technique.

Il s'ensuit que les courants respectifs $I_{ac}^{mc}$ dans les branches de détection et $I_{cm}^{mc}$ dans les branches de compensation s'écartent moins, dans le cas d'une résistance **542** nulle, l'un de l'autre lorsque la température *TPF* du substrat varie. Il en résulte globalement une plus grande stabilité en température du niveau continu moyen. Cette stabilité est illustrée de manière exemplative à la figure 6 par la courbe « *NC* selon l'invention ». Lorsqu'une résistance **542** adaptée non nulle est de plus mise en œuvre, il est obtenu une compensation substantielle complémentaire des effets différentiels liés à l'auto échauffement des bolomètres de détection **16**, que ne manifestent pas ou très peu les bolomètres de compensation **24**. On obtient pour un réglage optimal de la résistance **542**, accessible empiriquement par exemple, une stabilité quasiment parfaite du niveau continu moyen *NC* en fonction de la température *TPF* du substrat.

De plus, les dispersions $(I_{ac}max - I_{ac}min)$ et $(I_{cm}max - I_{cm}min)$ respectivement des courants de détection et de compensation due à la dispersion des caractéristiques intrinsèques des bolomètres, étant proportionnelles aux tensions de polarisation, la dispersion des niveaux continus l'est également. Il s'ensuit que la dispersion des niveaux continus selon l'invention est au premier ordre inférieure à la dispersion des niveaux continus produite dans l'état de la technique d'un facteur *(1+f1(TPF))*. Ce comportement avantageux est illustré par le resserrement de l'enveloppe de distribution des niveaux continus illustré en traits pointillés sur la figure 6, particulièrement vers les hautes températures, par rapport à l'enveloppe obtenue selon la technique de référence. En dessous de la température de référence on obtient dans le détail un léger élargissement, imperceptible sur la figure 6 compte tenu de l'affaiblissement substantiel des courants.

Il est préféré dans le cadre de l'invention, compenser les variations de résistance des bolomètres de détection **16** avec la température *TPF* du substrat par des variations asservies des tensions de polarisation, à hauteur de 20 à 40% seulement de la variation des résistances bolométriques au moyen du réglage adéquat de la résistance **562**. En d'autres termes, cela revient à retenir une valeur de l'ordre de 0,3 pour le terme pré-exponentiel de la relation (4). Cette préférence suffit à étendre substantiellement et en pratique de manière suffisante la plage de température opérationnelle du détecteur dont la limite supérieure est définie par le point d'intersection du pointillé supérieur de la courbe « *NC* selon l'état de la technique » avec le niveau de saturation haut du CTIA sur la figure 6.

On note ainsi qu'il est possible d'avoir un niveau continu moyen stable pour une large gamme de températures, notamment une plage de température d'au moins -30 °C - +90°C.

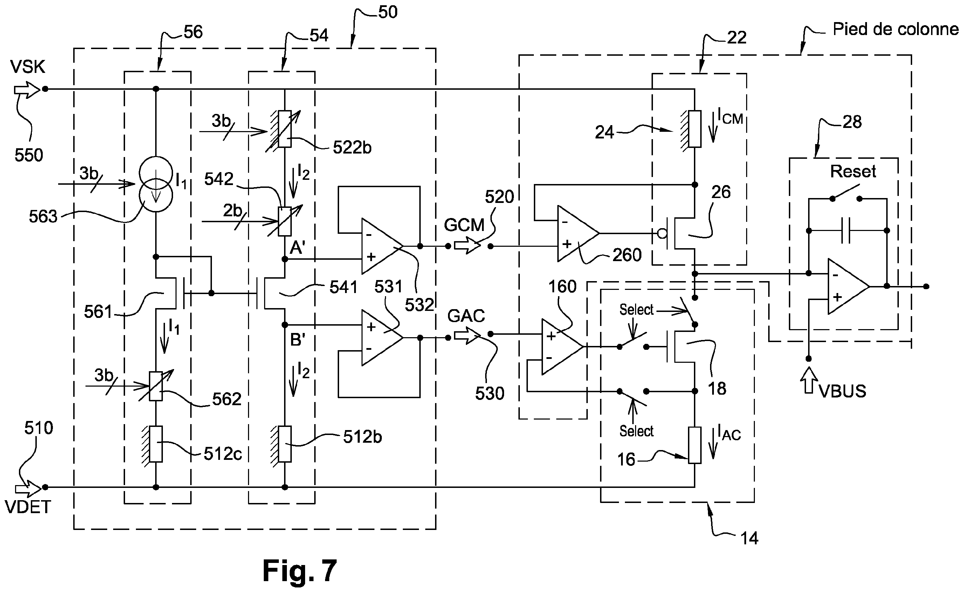

La figure 7 est un schéma électrique d'un second mode de réalisation du circuit **50** de commande des tensions de grille des transistors de polarisation **18** et **26** des bolomètres de détection **16** et de compensation **24**.

Le second mode de réalisation comporte, comme le premier mode de réalisation, les branches de courant **54**, **56** et les amplificateurs opérationnels **531**, **532**. A la différence du premier mode de réalisation, qui comporte la troisième branche de courant **52**, dans le second mode de réalisation, les sorties des amplificateurs opérationnels **531**, **532** sont bouclées en mode suiveur sur leurs entrées inverseuses de manière à reproduire les potentiels *VB'* et *VA'* aux bornes du transistor MOS **541**, et connectées respectivement directement aux bus de commande **530**, **520.**

Le circuit **100** selon le second mode de réalisation comporte deux buffers à injection directe **160**, **260** connectés aux bus **530**, **520** et aux transistors de polarisation **18**, **26** de la matrice **12** de bolomètres de détection. Plus particulièrement, les buffers **160**, **260** comprennent chacun un amplificateur opérationnel, dont les entrées non inverseuses sont respectivement connectées aux bus de commande **530**, **520**. L'entrée inverseuse et la sortie de l'amplificateur opérationnel **260** connectée au bus **520** véhiculant la tension de grille *GCM* sont respectivement connectées entre le bolomètre de compensation **24** et le transistor de polarisation **26** de chaque branche de compensation **22** agencée au pied de la colonne et à la grille du transistor **26** de cette branche **22**. L'entrée inverseuse et la sortie de l'amplificateur opérationnel **160** connectée au bus **530** véhiculant la tension de grille *GAC* sont quant à elles respectivement connectées, au travers d'interrupteurs commandés par le signal *Select* de sélection ligne, entre le bolomètre de détection **16** et le transistor de polarisation **18** de chaque branche de détection **14** de la colonne au pied de laquelle est agencé l'amplificateur **160** et aux grilles des transistors de polarisation **18** de ces branches de détection **14**. Les potentiels *VA'* et *VB'* sont ainsi sensiblement reproduits respectivement aux nœuds **A** et **B** de polarisation des bolomètres **16** et **24** de la rétine **12**.

Le second mode de réalisation est de conception plus simple au niveau du bloc **50**, et un peu plus complexe en pied de rétine, Il présente l'avantage de neutraliser l'effet des dispersions de tensions de seuil des transistors MOS de polarisation **18** et **26**, à l'origine d'une part non négligeable de la dispersion de niveau continu. En variante, il est aisé de reporter le transistor **18** en pied de colonne à proximité du buffer **160** de manière à libérer de l'espace de circuiterie dans le pixel **14**. Cette disposition particulière permet par exemple d'installer des fonctions électroniques avantageuses dans l'emprise du pixel **14**, au-delà du cadre de l'invention.

Les tensions de commande *GAC* et *GCM* des modes de réalisation venant d'être décrits peuvent être utilisées pour mettre en œuvre d'autres fonctions et/ou des calculs particuliers, comme cela sera illustré plus en détail par la suite. Parmi ces cas, il est proposé la mise en œuvre avantageuse d'un convertisseur analogique-numérique différentiel, qui nécessite à l'une de ses entrées la formation d'un signal de référence temporellement corrélé aux sorties des intégrateurs **28**, comme cela sera décrit plus en détail par la suite. Dans le premier mode de réalisation décrit ci-dessus, ce signal additionnel de référence est très avantageusement obtenu à partir de la branche **52** du circuit **50**. Dans le cas du second mode de réalisation décrit en relation avec la figure 7, ce signal de référence peut être formé à partir d'une branche additionnelle équivalente à la branche **52** du premier mode de réalisation, c'est-à-dire comportant des bolomètres équivalents aux éléments **522a** et **512a**, polarisés par des transistors MOS équivalents aux transistors MOS **54b** et **54a**, respectivement pilotés par les buffers **260** et **160**.

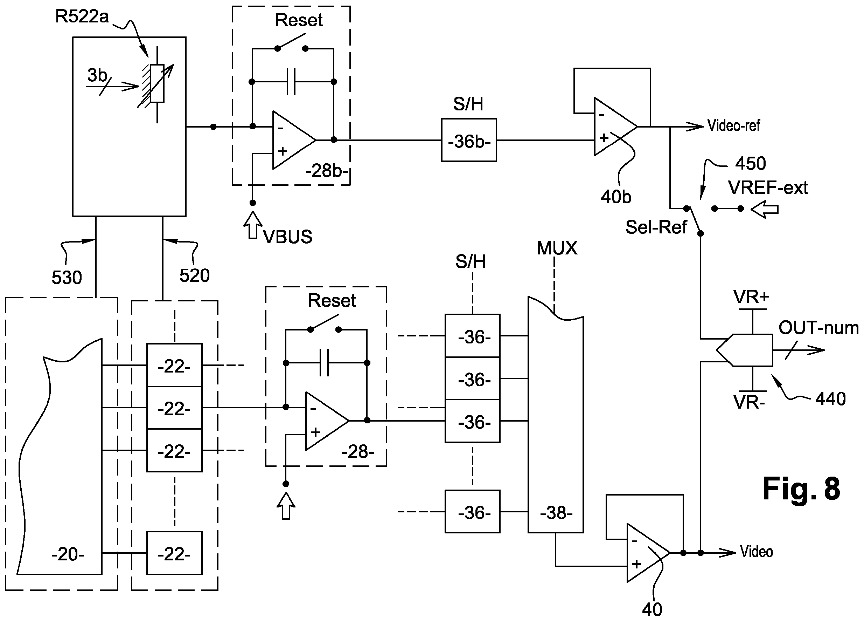

Il est maintenant décrit en relation avec le schéma proposé en figure 8 un troisième mode de réalisation particulier de l'invention, basé sur les éléments déjà décrits, et de nature à compléter les avantages déjà procurés par l'invention. Ce mode de réalisation comporte soit un détecteur tel que décrit en relation avec la figure 4, et comportant donc un circuit de commande **50** pourvu d'une branche de courant **52**, soit un détecteur décrit en relation avec la figure 7 et pourvu d'une branche additionnelle équivalente à la branche **52**. La description qui suit s'appuie sur le premier mode, mais se traduit facilement en cas de mise en oeuvre du second mode.

Selon ce troisième mode de réalisation, le circuit **50** est associé à un intégrateur CTIA **28b** en tous points semblable aux intégrateurs CTIA **28** installés en bout de chaque colonne du circuit de lecture usuel. Le potentiel *VBUS* est appliqué au point médian **C** du circuit **50** par l'intermédiaire de l'entrée non inverseuse de l'amplificateur de l'intégrateur **28b**. L'intégrateur **28b** est remis à zéro après chaque lecture d'une ligne de la matrice **12** de bolomètre de détection **16** par la même commande *Reset* que les intégrateurs **28b**, appliquée à l'interrupteur pilotable de l'intégrateur **28b**. La sortie de l'intégrateur **28b** est transmise à un amplificateur vidéo **40b**, identique à l'amplificateur video **40**, via un échantillonneur - bloqueur **36b**, identique aux échantillonneurs-bloqueurs **36** et activé en phase avec ceux-ci. L'amplificateur **40b**, par exemple de type amplificateur-suiveur, délivre en sortie un signal de référence *Video-ref*, correspondant à l'intégration du courant différentiel. $I_{522}$ - $I_{521}$ des demi-branches **521**, **522** de la branche **52** décrites précédemment en relation avec la figure 4. Plus précisément, l'intégrateur **28b** fournit au bout du temps d'intégration $T_{int}$ un signal égal à $VBUS - (I_{522} - I_{521})^*T_{int}$

Ce circuit est complété par un convertisseur analogique - numérique (CAN) différentiel **440**, par exemple sur 14 bits, et par un sélecteur **450** commandé par un signal *Sel-ref*, destiné à connecter optionnellement sur l'entrée de référence du CAN différentiel soit la tension de sortie *Video-ref*, soit une tension de référence externe indépendante *VREF-ext.*

Pour cette mise en œuvre particulière, il n'est plus besoin d'ajuster le niveau continu moyen *NC* en sortie des CTIA **40** au moyen du réglage par lien série de la résistance bolométrique **522b**. En effet il suffit de modifier légèrement le courant de compensation $I_{521}$, c'est-à-dire l'équilibre des courants $I_{521}$ et $I_{522}$ dans la seule branche **52** du circuit **50**, au moyen d'un réglage par exemple sur 3 bits de la résistance **522a**. Ce réglage est spécifique à ce mode de réalisation, et ne présente pas d'intérêt particulier pour les modes précédemment décrits. La tension de référence *Video-ref* obtenue après intégration du courant différentiel $(I_{521} - I_{522})$ par le CTIA **540b** est ainsi aisément ajustable pour positionner la sortie *OUT-num* du CAN différentiel **440** à une position souhaitée, par exemple centrale, de la dynamique du CAN **440**. Toutes les autres caractéristiques et variantes du circuit **50**, telles que précédemment discutées, sont par ailleurs typiquement identiques pour le troisième mode de réalisation.

L'autre entrée du CAN différentiel **440** reçoit par ailleurs séquentiellement la tension *Video* multiplexée issue de la lecture de la matrice **12** de bolomètres **16**, et le CAN différentiel **440** délivre en sortie une conversion numérique *OUTnum* de la différence des tensions analogiques (*Video - Video-ref*) ou de la différence des tensions analogiques (*Video - VREF-ext*) en fonction de l'état du sélecteur **450**. Il est entendu que le convertissseur différentiel et les éléments de sélection sont avantageusement proposés ici comme parties intégrantes du circuit **100**, mais peut tout aussi bien être reporté à l'extérieur du circuit voire à l'extérieur du système (caméra) intégrant un tel détecteur.

Le complément de circuiterie **28b**, **36b**, **40b**, **440**, **450** procure divers avantages, outre la disponibilité d'un signal différentiel numérisé en sortie, c'est-à-dire par nature immune aux perturbations au-delà du circuit de numérisation, et dépouillé du mode commun non porteur de signal utile.

En premier lieu, il est obtenu la réjection substantielle du bruit électrique porté par toutes les alimentations externes du détecteur selon l'invention. En effet, les bruits portés par les lignes *VDET* et *VSK* forment des perturbations indépendantes dans les courants $I_{522}$ et $I_{521}$, lesquelles sont reproduites en aval dans les courants $I_{ac}$ et $I_{cm}$ de la rétine **12**. Ces perturbations sont intégrées en parallèle et en cohérence temporelle par les CTIA **28** et **28b** dans les signaux *Vout* et *Vout-ref*. Les signaux transférés *Video* et *Video-ref* en sortie sont finalement soustraits l'un de l'autre par le convertisseur **440**, de sorte que les bruits de ces alimentaions sont essentiellement rejetés.

Par ailleurs, le potentiel *VBUS* est reproduit simultanément avec un gain unité dans les sorties de tous les CTIA **28** et **28b**. Il en va de même des perturbations associées (le bruit sur *VBUS*) qui sont intégrées simultanément et en cohérence temporelle sur les sorties *Vout* et *Vout-ref*, et se trouvent donc également essentiellement éliminées du signal *OUTnum* disponible en sortie du CAN **440**.

Enfin, il n'est plus besoin de piloter le circuit au moyen des lignes *GAC* et *GCM*, désormais formées selon l'invention de manière interne au détecteur, il n'y a donc pas lieu de considérer les bruits sur ces points d'entrée.

Cette disposition particulière est avantageuse par rapport à la mise en œuvre d'un CAN différentiel en sortie du circuit **100** selon l'état de la technique, car la tension *VREF-ext* qu'il est nécessaire de fournir sur l'une des entrées d'un CAN différentiel, par exemple identique au CAN **440** et disposé en sortie de l'amplificateur **40** du détecteur de l'état de la technique, est elle-même inévitablement très sensible au bruit. L'invention permet donc de disposer d'une sortie numérique *OUTnum* de très bonne qualité sans qu'il soit besoin de fournir une telle alimentation assortie de spécifications contraignantes de conception.

Il a été décrit des circuits analogiques de commande **50** des tensions des grilles *GAC*, *GCM* des transistors de polarisation **18**, **26** des bolomètres sensibles **16** et de compensation **24**.

Bien entendu, l'invention, qui consiste à corréler les tensions de polarisation entre elles et les courants de mode commun entre eux de manière à ce qu'ils suivent des variations proches voire identiques, s'applique également à un circuit de commande essentiellement numérique.

En se référant à nouveau à la figure 3, dans un mode de réalisation numérique, le circuit de génération de consigne **48** comporte un convertisseur analogique-numérique qui produit une valeur numérique de la grandeur *MTPF* dépendant de la température du substrat, ainsi qu'une unité de traitement d'informations numérique, par exemple un calculateur de type DSP, qui reçoit la valeur numérique de la grandeur *MTPF* et qui calcule des valeurs numériques des consignes de tension en fonction de la valeur numérique de la grandeur *MTPF*. Par exemple, l'unité de traitement d'informations comporte une mémoire dans laquelle est stockée une table de valeurs de consignes de tensions en fonction de la grandeur dépendant de la température du substrat et un processeur qui sélectionne dans cette table une valeur de consigne pour la tension GAC et une valeur de consigne associée (corrélée) pour la tension GCM en fonction de la valeur numérique courante de la grandeur *MTPF,* ou qui calcule une valeur courante desdites consignes de tension en interpolant les valeurs de ladite table. En variante, le calculateur met en œuvre des règles de calcul valables quelle que soit la valeur numérique courante de la grandeur *MTPF*, comme par exemple un modèle comportemental paramétré, ou de simples relations algébriques calibrées empiriquement pour produire le résultat recherché. Le circuit de génération de consigne **48** comporte également un convertisseur numérique-analogique, connecté à l'unité de traitement d'information et transformant les valeurs numériques des consignes de tension en consigne de tension analogique délivrées respectivement sur les bus **530** et **520**.

## Revendications

1. Détecteur bolométrique pour la détection d'un rayonnement infrarouge comprenant une matrice (12) de bolomètres de détection (16) comprenant chacun une membrane bolométrique suspendue au-dessus d'un substrat, comprenant :

- associé à chacun des bolomètres de détection (16):

  ◦ une branche de détection reliée entre un nœud d'intégration (S) et une première tension constante (VDET), comprenant le bolomètre de détection (16) et un circuit de polarisation (18) pour régler la tension aux bornes dudit bolomètre de détection (16) en fonction d'une première consigne de tension (GAC); le bolomètre de détection (16) présentant une résistance de détection (Rac) à une température de référence ;
  o une branche de compensation reliée entre le nœud d'intégration (S) et une seconde tension constante (VSK), comprenant un bolomètre de compensation (24) porté sensiblement à la température du substrat, et un circuit de polarisation (26) pour régler la tension aux bornes du bolomètre de compensation (24) en fonction d'une seconde consigne de tension (GCM); le bolomètre de compensation (24) présentant une résistance de compensation (Rcm) à la température de référence ; et
  ◦ un intégrateur (30, 32) connecté au nœud d'intégration (S) pour générer une tension en intégrant une différence entre le courant circulant dans le bolomètre de détection (16) et le bolomètre de compensation (24), ledit intégrateur présentant une dynamique électrique de sortie prédéterminée ;

- un circuit (50) de commande des consignes de tension (GAC, GCM) des circuits de polarisation des branches de détection et de compensation,

 *caractérisé* **en ce que** le circuit (50) de commande des consignes de tension (GAC, GCM) comporte :

- une première branche (56) comportant : un transistor (561) dont la grille est connectée au drain ; une source de courant constant (563) connectée entre le drain du transistor (561) et la seconde tension constante (VSK) ; et un bolomètre (512c) connecté entre la source du transistor (561) et la première tension constante (VDET) ; le bolomètre (512c) étant porté sensiblement à la température du substrat et présentant une résistance sensiblement identique à la résistance de détection (Rac) du bolomètre de détection (16) à la température de référence ;
- une seconde branche (54) comportant : un transistor (541) structurellement identique au transistor (561) de la première branche (56) dont la grille est connecté à la grille du transistor (561) de la première branche (56); un bolomètre (522b) connecté entre le drain du transistor (541) et la seconde tension constante (VSK) ; le bolomètre (522b) étant porté sensiblement à la température du substrat et présentant une résistance sensiblement identique à la résistance de compensation (Rcm) du bolomètre de compensation (24) à la température de référence ; et un bolomètre (512b) connecté entre la source du transistor (541) et la première tension constante (VDET) ; ce dernier bolomètre (512b) étant porté sensiblement à la température du substrat et présentant une résistance sensiblement identique à la résistance de détection (Rac) du bolomètre de détection (16) à la température de référence ;
- les deux branches (54, 56) formant un miroir de courant permettant d'obtenir la première consigne de tension (GAC) au niveau de la source du transistor (541) de la seconde branche (54) et la seconde consigne de tension (GCM) au niveau du drain du transistor (541) de la seconde branche (54).

2. Détecteur bolométrique selon la revendication 1, *caractérisé* **en ce que** la première branche (56) comporte également une première résistance non bolométrique (562) connectée entre le bolomètre (512c) et la source du transistor (561); la première résistance non bolométrique (562) étant programmable sur une plage de valeur comprise entre 0 et 30% de la valeur de la résistance du bolomètre (512c) à la température de référence prédéterminée.

3. Détecteur selon la revendication 2, *caractérisé* **en ce que** la première résistance non bolométrique (562) est réglée à une valeur particulière telle que la responsivité des bolomètres de détection (16) est essentiellement constante sur une plage de température prédéterminée de la température du substrat.

4. Détecteur selon la revendication 3, *caractérisé* **en ce que** l'énergie d'activation du matériau bolométrique constitutif du bolomètre (512c) de la première branche est voisine de 0,18 eV, et la valeur de la résistance non bolométrique (562) est voisine de 25% de la valeur de la résistance du bolomètre (512c).

5. Détecteur bolométrique selon l'une quelconque des revendications 1 à 4, *caractérisé* **en ce que** la seconde branche (54) comporte également une seconde résistance non bolométrique (542) connectée entre le bolomètre (522b) et le drain du transistor (541) ; la seconde résistance non bolométrique (542) étant programmable dans une plage de 0 à 10% de la valeur de la résistance du bolomètre (522b) à la température de référence prédéterminée.

6. Détecteur bolométrique selon l'une quelconque des revendications 1 à 5, *caractérisé* **:**

   **en ce que** le circuit de polarisation (18) de chaque branche de détection est constitué d'un premier transistor MOS, ou « TMOS », connecté en série avec le bolomètre de détection (16) de la branche de détection, entre la première tension constante (VDET) et le nœud d'intégration (S) ;
   **en ce que** le circuit de polarisation (26) de chaque branche de compensation est constitué d'un second TMOS connecté en série avec le bolomètre de compensation (24) de la branche de compensation, entre la seconde tension constante (VSK) et le nœud d'intégration (S) de la branche de détection associée à la branche de compensation, et de polarité opposée à celle des premiers TMOS (18) des branches de détection ;
   **en ce que** le circuit de commande (50) comporte en outre un circuit d'application (531, 532, 52) des consignes de tension (GAC, GCM) aux circuits de polarisation (18, 26), comportant :

   ◦ un quatrième bolomètre (522a), sensiblement identique au bolomètre (522b) de la seconde branche (54) connecté entre le drain du transistor (541) et la seconde tension constante (VSK) ;
   ◦ un troisième transistor TMOS (54b), sensiblement identique aux deuxièmes TMOS (26) des branches de compensation et connecté en série avec le quatrième bolomètre (522a) entre la seconde tension constante (VSK) et un deuxième nœud d'intégration (C) ;
   o un cinquième bolomètre (512a) sensiblement identique aux bolomètres (512b, 512c) des première et seconde branches (54, 56) connectés à la source des transistors (561, 541);
   o un quatrième transistor TMOS (54a) sensiblement identique aux premiers TMOS (18) des branches de détection, et connecté en série avec le cinquième bolomètre (512a) entre le deuxième nœud d'intégration (C) et la première tension constante (VDET);
   ◦ un premier amplificateur opérationnel (532), dont la borne non inverseuse est connectée au potentiel du drain du transistor (541) de la seconde branche, dont la borne inverseuse est connectée à la borne du quatrième bolomètre (522a) non portée à la seconde tension constante (VSK), et dont la sortie est connectée à la grille du troisième TMOS (54b);
   ◦ un second amplificateur opérationnel (531) dont la borne non inverseuse est connectée au potentiel de la source du transistor (541) de la seconde branche, dont la borne inverseuse est connectée à la borne du cinquième bolomètre (512a) non portée à la première tension constante (VDET), et dont la sortie est connectée à la grille du quatrième TMOS (54a);

   - **en ce que** la grille du second TMOS (26) de chaque branche de compensation est connectée au potentiel formé entre le quatrième bolomètre (522a) et le troisième transistor MOS (54b);
   - et **en ce que** la grille du premier TMOS (18) de chaque branche de détection est connectée au potentiel formé entre le cinquième bolomètre (512a) et le quatrième TMOS (54a).

7. Détecteur bolométrique selon la revendication 6, *caractérisé* **en ce qu'**il comprend en outre :

- un premier circuit (36, 40) de traitement de la tension en sortie de l'intégrateur (28) associé au bolomètre de détection (16);
- un intégrateur (28b), associé au circuit (50) de commande et identique à l'intégrateur (28) associé au bolomètre de détection (16), pour générer une tension en intégrant une différence entre le courant circulant dans le quatrième bolomètre (522a) et le courant circulant dans le cinquième bolomètre (512a);
- un second circuit (36b, 40b) de traitement de la tension en sortie de l'intégrateur (28b) associé au circuit de commande (50) et identique au premier circuit de traitement (36, 40); et
- un convertisseur analogique-numérique (440) pour convertir la différence entre les tensions en sortie des premier et second circuits de traitement.

8. Détecteur bolométrique selon l'une quelconque des revendications 1 à 5, *caractérisé* :

- **en ce que** le circuit de polarisation (18) de chaque branche de détection est constitué d'un premier transistor MOS, ou « TMOS », connecté en série avec le bolomètre de détection (16) de la branche de détection, entre la première tension constante (VDET) et le nœud d'intégration (S) ;
- **en ce que** le circuit de polarisation (26) de chaque branche de compensation est constituée d'un second TMOS connecté en série avec le bolomètre de compensation (24) de la branche de compensation, entre la seconde tension constante (VSK) et le nœud d'intégration (S) de la branche de détection associée à la branche de compensation, et de polarité opposée à celle des premiers TMOS (18) des branches de détection ;
- **en ce que** le circuit de commande (50) comporte en outre un circuit d'application (160, 260, 531, 532) des consignes de tension aux circuits de polarisation (18, 26), comportant :

    o pour chaque branche de compensation, un premier amplificateur opérationnel (260) dont la borne non inverseuse est connecté au drain du transistor (541) de la seconde branche (54), dont la borne inverseuse est connectée entre le bolomètre de compensation (24) et le second TMOS (26) de la branche de compensation, et dont la sortie est connectée à la grille du second transistor (26) de la branche de compensation ;
    o pour chaque branche de détection, un second amplificateur opérationnel (160) dont la borne non inverseuse est connectée à la source du transistor (541) de la seconde branche (54), dont la borne inverseuse est connectée entre le bolomètre de détection (16) et le premier TMOS (18) de la branche de détection, et dont la sortie est connectée à la grille du premier TMOS (18) de la branche de détection.

**Patentansprüche**

1. Bolometrischer Detektor zur Erkennung einer Infrarotstrahlung mit einem Array (12) bolometrischer Detektoren (16), umfassend jeweils eine bolometrische Membran, aufgehängt über einem Substrat, umfassend:

- verknüpft mit jedem der bolometrischen Detektoren (16):

    o einen Detektionszweig, verbunden zwischen einem Integrationsknoten (S) und einer ersten konstanten Spannung (VDET), mit einem bolometrischen Detektor (16) und einem Polarisationsschaltkreis (18) zur Steuerung der Spannung an den Klemmen dieses Detektionsbolometers (16) entsprechend einem ersten Spannungssollwert (GAC); der bolometrische Detektor (16) weist einen Detektionswiderstand (Rac) bei einer Referenztemperatur auf;
    o einen Kompensationszweig, verbunden zwischen dem Integrationsknoten (S) und einer zweiten konstanten Temperatur (YSK), der einen Kompensationsbolometer (24) enthält, der im Wesentlichen auf die Temperatur des Substrats gebracht wird und einem Polarisationsschaltkreis (26), zur Steuerung der Spannung an den Klemmen dieses Kompensationsbolometers (24) in Abhängigkeit von einem zweiten Spannungssollwert (GCM); der Kompensationsbolometer (24) weist einen Kompensationswiderstand (Rem) bei einer Referenztemperatur auf; und
    o einen Integrator (30, 32), verknüpft mit dem Integrationsknoten (S) zur Erzeugung einer Spannung durch Integration einer Differenz zwischen dem Strom, der im bolometrischen Detektor (16) fließt und dem Kompensationsbolometer (24), dieser Integrator weist eine vorher festgelegte elektrische Ausgangsdynamik auf;

- einen Steuerschaltkreis (50) der Spannungssollwerte (GAC, GCM) der Polarisationsschaltkreise der Detektions- und Kompensationszweige,

*dadurch gekennzeichnet, dass* der Steuerschaltkreis (50) der Spannungssollwerte (GAC, GCM) enthält:

- einen ersten Zweig (56) mit: einem Transistor (561), dessen Gate mit dem Drain verbunden ist; einer konstanten Stromquelle (563), verbunden zwischen dem Transistordrain (561) und der zweiten konstanten Spannung (VSK); und mit einem Bolometer (512c), verbunden zwischen der Transistorsource (561) und der ersten konstanten Spannung (VDET); der Bolometer (512c) wird dabei im Wesentlichen auf die Temperatur des Substrats gebracht und weist einen Widerstand auf, der im Wesentlichen dem Detektionswiderstand (Rac) des bolometrischen Detektors (16) bei Referenztemperatur entspricht;
- einen zweiten Zweig (54) mit: einem Transistor (541) strukturell identisch mit dem Transistor (561) des ersten Zweigs (56), dessen Gate mit dem Transistorgate (561) des ersten Zweigs (56) verbunden ist, einem Bolometer (522b), verbunden zwischen dem Drain des Transistors (541) und der zweiten konstanten Spannung (VSK); der Bolometer (522b) wird dabei im Wesentlichen auf die Temperatur des Substrats gebracht und weist einen Widerstand auf, der im Wesentlichen mit dem Kompensationswiderstand (Rem) des Kompensationsbolometer (24) bei Referenztemperatur übereinstimmt; und mit einem Bolometer (512b), verbunden zwischen der Transistorsource (541) und der ersten konstanten Spannung (VDET); dieser letzte Bolometer (512b) wird dabei im Wesentlichen auf die Temperatur des Substrats gebracht und weist einen Widerstand auf, der im Wesentlichen dem Detektionswiderstand (Rac) des bolometrischen Detektors (16) bei der Referenztemperatur entspricht;
- die beiden Zweige (54, 56) bilden einen Stromspiegel, mit dem es möglich ist, den ersten Spannungssollwert (GAC) in Höhe der Transistorsource (541) des zweiten Zweigs (54) und den zweiten Spannungssollwert (GCM) in Höhe des Transistordrains (541) des zweiten Zweigs (54) zu erreichen.

2. Bolometrischer Detektor nach Anspruch 1, *dadurch gekennzeichnet, dass* der erste Zweig (56) auch einen nicht bolometrischen Widerstand (562) enthält, verbunden zwischen dem Bolometer (512c) und der Transistorsource (561); der erste nicht bolometrische Widerstand (562) ist programmierbar innerhalb einer Wertespanne zwischen 0 und 30% des Wertes des Widerstands des Bolometers (512c) bei der vorher festgelegten Referenztemperatur.

3. Detektor nach Anspruch 2, *dadurch gekennzeichnet, dass* der erste nicht bolometrische Widerstand (562) auf einen besonderen Wert eingestellt ist, so dass die Responsivität des bolometrischer Detektoren (16) innerhalb eines vorher festgelegten Temperaturbereichs der Substrattemperatur im Wesentlichen konstant ist.

4. Detektor nach Anspruch 3, *dadurch gekennzeichnet, dass* die Aktivierungsenergie des bolometrischen Materials, das den Bolometer (512c) des ersten Zweigs bildet, nahe 0,18 eV liegt und der Wert des nicht bolometrischen Widerstandes (562) nahe 25% des Wertes des Bolometerwiderstands (512c) liegt.

5. Bolometrischer Detektor nach einem beliebigen der Ansprüche 1 bis 4, *dadurch gekennzeichnet, dass* der zweite Zweig (54) auch einen zweiten nicht bolometrischen Widerstand (542) enthält, verbunden zwischen dem Bolometer (522b) und dem Transistordrain (541); der zweite nicht bolometrische Widerstand (542) ist dabei innerhalb eines Bereichs von 0 bis 10% des Wertes des Bolometerwiderstandes (522b) bei der vorher festgelegten Referenztemperatur programmierbar.

6. Bolometrischer Detektor nach einem beliebigen der Ansprüche 1 bis 5, *dadurch gekennzeichnet, dass*:

- der Polarisationsschaltkreis (18) jedes Detektionszweigs aus einem ersten Transistor MOS, oder « TMOS » besteht, in Reihe geschaltet mit dem bolometrischen Detektor (16) des Detektionszweigs zwischen der ersten konstanten Spannung (VDET) und dem Integrationsknoten (S);
- dadurch, dass der Polarisationsschaltkreis (26) jedes Kompensationszweigs aus einem zweiten TMOS besteht, in Reihe geschaltet mit dem Kompensationsbolometer (24) des Kompensationszweigs, zwischen der zweiten konstanten Spannung (VSK) und dem Integrationsknoten (S) des Detektionszweigs, der mit dem Kompensationszweig verbunden ist, mit einer Polarität entgegengesetzt zu der des ersten TMOS (18) der Detektionszweige;
- dass der Steuerschaltkreis (50) außerdem einen Anwendungsschaltkreis (531, 532, 52) der Spannungssollwerte (GAC, GCM) auf die Polarisationsschaltkreise (18, 26) enthält, umfassend:
o einen vierten Bolometer (522a), im Wesentlichen entsprechend dem Bolometer (522b) des zweiten Zweigs (54), verbunden zwischen dem Transistordrain (541) und der zweiten konstanten Spannung (VSK):

o einen dritten Transistor TMOS (54b), im Wesentlichen entsprechend dem zweiten TMOS (26) der Kompensationszweige und in Serie geschaltet mit dem vierten Bolometer (522a) zwischen der zweiten konstanten Spannung (VSK) und einem zweiten Integrationsknoten (C);

o einen fünften Bolometer (512a) im Wesentlichen entsprechend den Bolometern (512b, 512c) des ersten und zweiten Zweiges (54, 56), verbunden mit der Source der Transistoren (561, 541);

o einen vierten Transistor TMOS (54a) im Wesentlichen entsprechend den ersten TMOS (18) der Detektionszweige und in Reihe geschaltet mit dem fünften Bolometer (512a) zwischen dem zweiten Integrationsknoten (C) und der ersten konstanten Spannung (VDET);

o einen ersten Operationsverstärker (532), dessen nicht-invertierende Klemme mit dem Potential des Transistordrains (541) des zweiten Zweigs verbunden wird, dessen invertierende Klemme mit der Klemme des vierten Bolometers (522a) verbunden ist, die nicht auf die zweite konstante Spannung (VSK) gebracht wurde und dessen Ausgang mit dem Gate des dritten TMOS (54b) verbunden wird;

o einen zweiten Operationsverstärker (531) dessen nicht-invertierende Klemme mit dem Potential der Transistorsource (541) des zweiten Zweigs verbunden wird, dessen invertierende Klemme mit der Klemme des fünften Bolometers (512a) verbunden ist, die nicht auf die erste konstante Spannung (VDET), gebracht wurde und dessen Ausgang mit dem Gate des TMOS (54a) verbunden wird;

■ dass das Gate des zweiten TMOS (26) jedes Kompensationszweigs verbunden wird mit dem Potential, gebildet zwischen dem vierten Bolometer (522a) und dem dritten MOS - Transistor (54b);

■ und dass das Gate des ersten TMOS (18) jedes Detektionszweigs verbunden ist mit dem Potential, gebildet zwischen dem fünften Bolometer (512a) und dem vierten TMOS (54a).

7. Bolometrischer Detektor nach Anspruch 6, *dadurch gekennzeichnet,* **dass** er außerdem enthält:

■ einen ersten Schaltkreis (36, 40) zur Behandlung der Spannung am Ausgang des Integrators (28), verbunden mit dem bolometrischen Detektor (16);

■ einen Integrator (28b), verbunden mit dem Steuerschaltkreis (50) und entsprechend dem Integrator (28) verbunden mit dem bolometrischen Detektor (16), zur Erzeugung einer Spannung durch Integration einer Differenz zwischen dem im vierten Bolometer (522a) fließenden Strom und dem im fünften Bolometer (512a) fließenden Strom;

■ einen zweiten Schaltkreis (36b, 40b) zur Behandlung der Spannung am Ausgang des Integrators (28b) verbunden mit dem Steuerschaltkreis (50) und entsprechend dem ersten Behandlungsschaltkreis (36, 40); und

■ einen Analog-Digital-Wandler (440) zur Umwandlung der Differenz der Spannungen am Ausgang des ersten und des zweiten Behandlungsschaltkreises.

8. Bolometrischer Detektor nach einem beliebigen der Ansprüche 1 bis 5, *dadurch gekennzeichnet, dass:*

■ der Polarisationsschaltkreis (18) jedes Detektionszweigs aus einem ersten Transistor MOS, oder « TMOS » besteht, in Reihe geschaltet mit dem bolometrischen Detektor (16) des Detektionszweigs zwischen der ersten konstanten Spannung (VDET) und dem Integrationsknoten (S);

■ dass der Polarisationsschaltkreis (26) jedes Kompensationszweigs aus einem zweiten TMOS besteht, in Reihe geschaltet mit dem Kompensationsbolometer (24) des Kompensationszweigs zwischen der ersten konstanten Spannung (VSK) und dem Integrationsknoten (S) des Detektionszweigs, der mit dem Kompensationszweig verbunden ist, und mit einer Polarität entgegengesetzt zu der der ersten TMOS (18) der Detektionszweige;

■ dass der Steuerschaltkreis (50) außerdem einen Anwendungsschaltkreis (160, 260, 531, 532) der Spannungssollwerte, auf die Polarisationsschaltkreise (18, 26), enthält, umfassend:

o für jeden Kompensationszweig einen ersten Operationsverstärker (260), dessen nicht-invertierende Klemme mit dem Potential des Transistordrains (541) des zweiten Zweigs verbunden wird, dessen invertierende Klemme zwischen dem Kompensationsbolometer (24) und dem zweiten TMOS (26) des Kompensationszweigs eingebaut ist und dessen Ausgang mit dem Gate des zweiten Transistors (26) des Kompensationszweigs verbunden ist;

o für jeden Detektionszweig einen zweiten Operationsverstärker (160) dessen nicht-invertierende Klemme mit der Transistorsource (541) des zweiten Zweigs verbunden wird, dessen invertierende Klemme zwischen dem Detektionsbolometer (16) und dem ersten TMOS (18) des Detektionszweigs eingebaut ist und dessen Ausgang mit dem Gate des ersten Transistors (18) des Kompensationszweigs verbunden ist.

## Claims

1. A bolometric detector for detecting an infrared radiation, comprising an array (12) of detection bolometers (16) each comprising a bolometric membrane suspended above a substrate, comprising:

- associated with each of the detection bolometers (16) :

  o a detection branch connected between an integration node (S) and a first constant voltage (VDET), comprising the detection bolometer (16) and a bias circuit (18) to set the voltage across said detection bolometer (16) as a function of a first control voltage (GAC) ; said detection bolometer (16) having a detection resistance (Rac) at a reference temperature;
  o a compensation branch connected between an integration node (S) and a second constant voltage (VSK), comprising a compensation bolometer (24) substantially having the substrate temperature, and a bias circuit (26) for setting the voltage across the compensation bolometer (24) as a function of a second control voltage (GCM) ; the compensation bolometer having a compensation resistance (Rcm) at said reference temperature; and
  o an integrator (30, 32) connected to the integration node (S) for generating a voltage by integrating a difference between the current flowing through the detection bolometer (16) and the compensation bolometer (24), said integrator having a predetermined output electric dynamic range;

- a circuit (50) for controlling the control voltages (GAC, GCM) of the bias circuits of the detection and compensation branches,

wherein the control circuit (50) of the control voltages (GAC, GCM) comprises:

- a first branch (56) comprising a transistor (561) which gate is connected to the drain ; a constant current source (563) connected to between the drain of transistor (561) and the second constant voltage (VSK) ; and a bolometer (512c) connected between the source of transistor (561) and the first constant voltage (VDET) ; the bolometer (512c) substantially having the substrate temperature and having a resistance substantially identical to the detection resistance (Rac) of the detection bolometer (16) at reference temperature ;
- a second branch (54) comprising a transistor (541) substantially identical to transistor (561) of the first branch (56), which gate is connected to the gate of transistor (561) of the first branch (56) ; a bolometer (522b) connected between the drain of transistor (541) and the second constant voltage (VSK) ; the bolometer (522b) substantially having the substrate temperature and having a resistance substantially identical to the compensation resistance (Rcm) of the compensation bolometer (24) at reference temperature ; and a bolometer (512b) connected between the source of transistor (541) and the first constant voltage (VDET) ; said bolometer (512b) substantially having the substrate temperature and having a resistance substantially identical to the detection resistance (Rac) of the detection bolometer (16) at reference temperature ;

the two branches (54, 56) forming a current mirror enabling to obtain the first control voltage (GAC) at the source of transistor (541) of the second branch (54) and the second control voltage (GCM) at the drain of transistor (541) of the second branch (54).

2. The bolometric detector of claim 1, wherein the first branch (56) also comprises a first non-bolometric resistance (562) connected between bolometer (512c) and the source of transistor (561) ; the first non-bolometric resistance (562) being programmable over a range of values between 0 and 30% of the resistance value of the bolometer (512c) at the predetermined reference temperature.

3. The bolometric detector of claim 2, wherein the non-bolometric resistance (562) is set to a specific value such that the responsivity of the detection bolometers (16) is essentially constant over a predetermined temperature range of the substrate temperature.

4. The bolometric detector of claim 3, wherein the energy of activation of the bolometric material forming the first bolometer (512c) is close to 0.18 eV, and the value of non-bolometric resistor (562) is close to 25% of the resistance value of the bolometer (512c).

5. The bolometric detector of claims 1 to 4, wherein the second branch (54) also comprises a second non-bolometric resistance (542) connected between bolometer (522b) and the drain of transistor (541) ; said second non-bolometric resistance (542) being programmable over a range of values between 0 and 10% of the resistance value of the bolometer (522b) at the predetermined reference temperature.

**6.** The bolometric detector according to any of claims 1 to 5 :

■ wherein the biasing circuit (18) of each detection branch is formed of a first MOS transistor or "TMOS", series-connected with the detection bolometer (16) of the detection branch, between the first constant voltage (VDET) and the integration node (S);
■ wherein the biasing circuit (26) of each compensation branch is formed of a second TMOS series-connected with the compensation bolometer (24) of the compensation branch, between the second constant voltage (VSK) and the integration node (S) of the detection branch associated with the compensation branch, and having a polarity opposite to that of the first TMOSs (18) of the detection branches;
■ wherein the control circuit (50) further comprises a circuit (531, 532, 52) for applying the control voltages (GAC, GCM) to the bias circuits (18, 26), comprising:

○ a fourth bolometer (522a), substantially identical to the bolometer (522b) of the second branch (54) connected between the drain of transistor (541) and the second constant voltage (VSK) ;
○ a third TMOS (54b), substantially identical to the second TMOSs (26) of the compensation branches and series-connected with the fourth bolometer (522a) between the second constant voltage (VSK) potential (550) and a second integration node (C);
○ a fifth bolometer (512a) substantially identical to bolometers (512b, 512c) of first and second branches (54, 56) connected to the source of transistors (561, 541) ;
○ a fourth transistor TMOS (54a), substantially identical to the first TMOSs (18) of the detection branches and series-connected with the fifth bolometer (512a) between the second integration node (C) and the first constant voltage (VDET);
○ a first operational amplifier (532) having its non-inverting terminal connected to the potential of the drain of transistor (541) of said second branch, having its inverting terminal connected to the terminal of the fourth bolometer (522a) which is not taken to the second constant voltage (VSK), and having its output connected to the gate of the third TMOS (54b);
○ a second operational amplifier (531) having its non-inverting terminal connected to the source of transistor (541) of the second branch, having its inverting terminal connected to the terminal of the fifth bolometer (512a) which is not taken to the first constant voltage (VDET), and having its output connected to the gate of the fourth TMOS (54a);

■ wherein the gate of the second TMOS (26) of each compensation branch is connected to the potential formed between the fourth bolometer (522a) and the third MOS transistor (54b);
■ and wherein the gate of the first TMOS (18) of each detection branch is connected to the potential between the fifth bolometer (512a) and the fourth TMOS (54a).

**7.** The bolometric detector of claim 6, wherein it further comprises:

■ a first circuit (36, 40) for processing the voltage at the output of the integrator (28) associated with the detection bolometer (16);
■ an integrator (28b), associated with the control circuit (50) and identical to the integrator (28) associated with the detection bolometer (16), to generate a voltage by integrating a difference between the current flowing through the fourth bolometer (522a) and the current flowing through the fifth bolometer (512a);
■ a second circuit (36b, 40b) for processing the output voltage of the integrator (28b) associated with the control circuit (50) and identical to the first processing circuit (36, 40); and
■ an analog-to-digital converter (440) for converting the difference between the output voltages of the first and second processing circuits.

**8.** The bolometric detector according to any of claims 1 to 5 :

■ wherein the biasing circuit (18) of each detection branch is formed of a first MOS transistor or "TMOS", series-connected with the detection bolometer (16) of the detection branch, between the first constant voltage (VDET) and the first integration node (S);
■ wherein the biasing circuit (26) of each compensation branch is formed of a second TMOS series-connected with the compensation bolometer (24) of the compensation branch, between the second constant voltage (VSK) and the integration node (S) of the detection branch associated with the compensation branch, and having a polarity opposite to that of the first TMOSs (18) of the detection branches;
■ wherein the control circuit (50) further comprises a circuit (160, 260, 531, 532) for applying the control voltages to the bias circuits (18, 26), comprising:

o for each compensation branch, a first operational amplifier (260) having its non-inverting terminal taken to the drain of the transistor (541) of the second branch (54), having its inverting terminal connected between the compensation bolometer (24) and the second TMOS (26) of the compensation branch, and having its output connected to the gate of the second transistor (26) of the compensation branch;

o for each detection branch, a second operational amplifier (160) having its non-inverting terminal taken to the source of transistor (541), having its inverting terminal connected between the detection bolometer (16) and the first TMOS (18) of the detection branch, and having its output connected to the gate of the first TMOS (18) of the detection branch.

**Fig. 1**
(Etat de la technique)

PIXEL DE DETECTION

PIXEL DE COMPENSATION

CTIA

VIDEO

**Fig. 2**

Fig. 3

**Fig. 4**

$I_{ac}^{mc} / I_{ac}^{mc}$ (30°C)

$I_{cm}^{mc} / I_{cm}^{mc}$ (30°C)

$I_2$(TPF) / $I_2$(30°C)

$V_{ac}$=Cte
$V_{cm}$=Cte

$V_{ac}$max ou/et
$V_{cm}$max

R(562)=0,3*R(512b)

R(562)=0

TPF (°C)

$T_{ref}$

## Fig. 5

NC (Volt)

T de réglage
initial    Tmax1 Tmax2

$V_{out}$ max

$D_{el}$

NC selon l'état
technique

$V_{out}$ min

NC selon
l'invention

TPF (°C)

## Fig. 6

**Fig. 7**

EP 2 770 312 B1

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6433333 B
- US 6690013 B
- WO 2007106018 A
- US 5756999 A
- US 6028309 A
- WO 9835212 A
- US 7417230 B

**Littérature non-brevet citée dans la description**

- Uncooled amorphous silicon technology enhancement for 25 $\mu$m pixel pitch achievement. **E. MOTTIN et al.** Infrared Technology and Application XXVIII. SPIE, vol. 4820E